# EUROPEAN PATENT SPECIFICATION

(11) **EP 3 644 527 B1**
(45) Date of publication and mention of the grant of the patent: **30.03.2022**
(21) Application number: 19204686.0
(22) Date of filing: 22.10.2019
(51) Int. Cl.: H04B 7/10

(54) **RADIO COMMUNICATION SYSTEM AND RADIO COMMUNICATION METHOD**
FUNKKOMMUNIKATIONSSYSTEM UND FUNKKOMMUNIKATIONSVERFAHREN
SYSTÈME DE COMMUNICATIONS RADIO ET PROCÉDÉ DE COMMUNICATIONS RADIO

(30) Priority: 25.10.2018 JP 2018200863
(43) Date of publication of application: 29.04.2020
(73) Proprietor: Hitachi, Ltd., Tokyo 100-8280 (JP)
(72) Inventor: Takei, Ken, Tokyo, 100-8280 (JP)
(74) Representative: Manitz Finsterwald Patent- und Rechtsanwaltspartnerschaft mbB

(56) References cited:
- WO-A1-2018/185883
- US-A1- 2015 381 242
- US-A1- 2018 152 258

## Description

### BACKGROUND OF THE INVENTION

### 1. Field of the Invention

The present invention relates to a technology that enables communication by selecting a plurality of propagation paths by controlling polarization.

### 2. Description of the Related Art

A concept such as Internet of Things (IoT) that connects many devices to the Internet, collects signals related to the state of the devices, delivers signals for controlling the devices through the Internet based on the contents of the signals, and realizes a high efficient operation of various systems including the devices as components is attracting attention. Various technologies are being developed for the realization of the IoT.

In order to realize the IoT, sensors monitoring information on devices and actuators controlling an operation of devices need to be connected to a network. For this reason, it is necessary to develop means for connecting a network to a large number of sensors and actuators installed on the surface of the device and around the periphery thereof. Since there are a large number of sensors and actuators for a plurality of devices that constitutes the system, it is preferable to connect the network with the sensors and the actuators via radio communication that does not require a cable as physical connection means from the viewpoint of eliminating constraints on the operating state of the devices and reducing installation cost of hardware for the connection.

In the radio communication, a radio device including a transmitter and a receiver is installed in the devices. For this reason, electromagnetic waves transmitted and received by the radio device are scattered by the same devices, and therefore, generally, regarding the communication between the transmitter and the receiver, line-of-sight communication which is possible when there are no obstacles to the electromagnetic waves cannot be performed, and communication mainly using reflected waves is performed. In such a communication environment, since many devices surround a transmitter and a receiver that perform communication, radio propagation paths are formed by a plurality of reflections. Since the plurality of propagation paths are formed by the electromagnetic waves reflected by different devices, the communication quality of the propagation paths varies depending on the state of the devices.

For example, in an example in which IoT is introduced into a substation facility including a large number of transformers, the device is a transformer. For this reason, when a specific transformer generates noise due to a high voltage caused by some trouble and a frequency band of the noise has a common part with a carrier frequency of the electromagnetic waves or a frequency in a signal band which is used for the radio communication, the electromagnetic waves used in the radio communication are affected by noise during reflection and the communication quality is degraded. The communication quality can be improved by reducing the influence of the electromagnetic waves passing through the propagation path which degrade the communication quality among the plurality of propagation paths formed between the transmitter and the receiver.

The electromagnetic waves are transverse waves, and transmit signals by polarization generated in a direction perpendicular to a propagation direction. When the electromagnetic waves are reflected, it is known that the polarization undergoes an inherent change (polarization shift) depending on a directional relationship between a normal vector of a reflecting surface and a vector of the electromagnetic wave, which is called Snell's law.

Since the positions of the devices surrounding the transmitter and the receiver vary in general, the positional relationship between a vector of an electromagnetic wave transmitted from a specific transmitter and the vector of the reflecting surface by a plurality of devices is also unique to each device. Therefore, the polarization shift in the propagation path formed by reflections by different devices is unique, and it is possible to reduce the influence of the specific propagation path by allowing the transmitter and the receiver to control the polarization.

As means for improving the communication quality between the transmitter and the receiver using the polarization, in the prior art described in JP 2007-189306 A, the transmitter transmits information spread with different codes for polarizations orthogonal to each other, and the receiver receives signals, which are transmitted with different transmission polarizations using the correlation of the codes, with polarizations of different receiving antennas, obtains a propagation path matrix component between transmission and reception and separates the signals transmitted with different polarizations by calculating the propagation path matrix, and selects communication with any of the polarizations. In addition, JP 2018-088570 A discloses a radio system that can perform communication through a shield with a loss due to a rotating polarization.

In the technology described in JP 2007-189306 A, the transmitter and the receiver are surrounded by the plurality of devices, and the line-of-sight communication is not possible, so it is not possible to selectively use the plurality of propagation paths using reflected waves formed between the transmitter and the receiver. For this reason, there is a problem in that the influence of the propagation paths that degrades the communication quality among the plurality of propagation paths cannot be reduced and the improvement in the communication quality cannot be sufficiently realized.

### SUMMARY OF THE INVENTION

It is the object of the present invention to provide a radio communication system and method capable of controlling a polarization used by a transmitter and a receiver in radio communication to reduce the influence of a specific propagation path among a plurality of propagation paths formed between the transmitter and the receiver, thereby improving radio communication quality.

This object is accomplished by the features of the independent claims.

It is possible to reduce the influence of the specific propagation path among the plurality of propagation paths formed between the transmitter and the receiver and improve the radio communication quality.

### BRIEF DESCRIPTION OF THE DRAWINGS

Fig. 1 is a diagram for describing an example of a configuration of a radio system for reducing an influence of a specific propagation path using rotating polarization and improving communication quality;
Fig. 2A is a diagram for describing an example of a concept of an operation of the radio system for reducing an influence of a specific propagation path using rotating polarization and improving communication quality;
Fig. 2B is a diagram for describing an example of a concept of the operation of the radio system for reducing an influence of a specific propagation path using rotating polarization and improving communication quality during measurement of a propagation path and information communication;
Fig. 2C is a diagram for describing an example of a concept of the operation of the radio system for reducing an influence of a specific propagation path using rotating polarization and improving communication quality during the measurement of the propagation path;
Fig. 2D is a diagram for describing an example of a concept of the operation of the radio system for reducing an influence of a specific propagation path using rotating polarization and improving communication quality during the information communication;
Fig. 3 is a diagram for describing an example of a communication protocol of the radio system for reducing an influence of a specific propagation path using rotating polarization and improving communication quality;
Fig. 4 is a diagram for describing an example of another configuration of a radio system for reducing an influence of a specific propagation path using rotating polarization and improving communication quality;
Fig. 5 is a diagram for describing an example of another configuration of a radio system for reducing an influence of a specific propagation path using rotating polarization and improving communication quality;
Fig. 6A is a diagram for describing an example of another communication protocol of the radio system for reducing an influence of a specific propagation path using rotating polarization and improving communication quality;
Fig. 6B is a diagram for describing an example of another communication protocol of the radio system for reducing an influence of a specific propagation path using rotating polarization and improving communication quality;
Fig. 6C is a diagram for describing an example of another communication protocol of the radio system for reducing an influence of a specific propagation path using rotating polarization and improving communication quality;
Fig. 7 is a diagram for describing an example of another configuration of a radio system for reducing an influence of a specific propagation path using rotating polarization and improving communication quality;
Fig. 8 is a diagram for describing an example of a configuration of a transmitter of the radio system for reducing an influence of a specific propagation path using rotating polarization and improving communication quality;
Fig. 9 is a diagram for describing an example of another configuration of a radio system for reducing an influence of a specific propagation path using rotating polarization and improving communication quality;
Fig. 10 is a diagram for describing an example of a configuration of radio device of the radio system for reducing an influence of a specific propagation path using rotating polarization and improving communication quality;
Fig. 11 is a diagram for describing an example of another configuration of the radio device of the radio system for reducing an influence of a specific propagation path using rotating polarization and improving communication quality;
Fig. 12 is a diagram for describing an example of another configuration of the radio device of the radio system for reducing an influence of a specific propagation path using rotating polarization and improving communication quality;
Fig. 13 is a diagram for describing an example of another configuration of the radio device of the radio system for reducing an influence of a specific propagation path using rotating polarization and improving communication quality;
Fig. 14 is a diagram for describing an example of another configuration of the radio device of the radio system for reducing an influence of a specific propagation path using rotating polarization and improving communication quality;
Fig. 15 is a diagram for describing an example of another configuration of the radio device of the radio system for reducing an influence of a specific propagation path using rotating polarization and improving communication quality;
Fig. 16 is a diagram for describing an example of another configuration of the radio device of the radio system for reducing an influence of a specific propagation path using rotating polarization and improving communication quality;
Fig. 17 is a diagram for describing an example of a lift monitoring and controlling system to which the radio system for reducing an influence of a specific propagation path using rotating polarization and improving communication quality is applied; and
Fig. 18 is a diagram for describing an example of a substation monitoring and controlling system to which the radio system for reducing an influence of a specific propagation path using rotating polarization and improving communication quality is applied.

### DESCRIPTION OF THE PREFERRED EMBODIMENTS

Hereinafter, embodiments will be described with reference to the drawings. However, the present invention is not construed as being limited to the description of the embodiments below. Those skilled in the art will readily understand that the specific configuration can be changed without departing from the scope of the present invention as defined by the appended claims.

In the configurations of the invention described below, the same portions or portions having similar functions are denoted by the same reference numerals in different drawings, and redundant description thereof may be omitted.

In the case where there are a plurality of elements having the same or similar functions, these elements will be described with the same reference numerals with different subscripts. However, when there is no need to distinguish between a plurality of elements, these elements may be described with the same reference numerals without subscripts.

Notations such as "first", "second", and "third" in this specification and the like are attached to identify the components, and do not necessarily limit the number, order, or contents thereof. In addition, numbers for identifying components are used for each context, and numbers used in one context do not necessarily indicate the same components in another context. Further, it does not preclude that a component identified by a certain number also functions as a component identified by another number.

The position, size, shape, range, and the like of each component illustrated in the drawings and the like may not represent the actual position, size, shape, range, or the like in order to facilitate understanding of the invention. For this reason, the present invention is not necessarily limited to the position, size, shape, range, and the like disclosed in the drawings and the like.

An example of a system described in the following embodiment is a radio system including a transmitter and a receiver, in which the transmitter transmits M types of independent rotating polarizations at the same time, and the receiver receives M types of independent rotating polarizations as N types of independent rotating polarization at the same time. Here, a combination of a rotation direction of rotating polarization and a propagation direction (transmission direction or reception direction) with respect to the antenna is called a type. Here, M ≤ N (where M is a natural number and N is a natural number of 2 or more), and the M types of rotating polarizations transmitted depend on a state of a propagation path from the transmitter to the receiver, and reach the receiver as the N types of rotating polarizations. Usually, since there are a plurality of propagation paths for one type of rotating polarization transmitted, M < N may be often considered. Since there are two types of rotating polarizations such as left or right rotating polarization and a three-dimensional space is three directions, M = N = 6 is one example to comprehensively understand the possible state of the propagation path. Note that simultaneous transmission or reception means that processing is performed in parallel, and does not require physically strict simultaneity.

By decoding and evaluating signals transmitted from N types of independent rotating polarizations and selecting one or a plurality of signals with good communication quality, the influence of a specific propagation path among a plurality of propagation paths can be reduced to improve radio communication quality. The method for reducing an influence of a specific propagation path among a plurality of propagation paths is not particularly limited, but for example, a method for storing received signals from all propagation paths once and using only signals from propagation paths selected later to perform decoding is considered. Alternatively, an incoming wave having a specific rotating polarization may be deleted by causing the receiver to match a direction of a received electric field with a direction for a specific propagation path. The direction of the received electric field may be controlled by mechanically moving an antenna, or may be controlled by adjusting a gain or the like as the antenna is fixed.

Describing forms in an embodiment by way of example, the transmitter transmits signals using electromagnetic waves of two rotating polarizations from which a rotation direction differs, and the receiver separates and receives rotating polarizations in different rotation directions. Describing one example of a form in another embodiment, the transmitter transmits signals using electromagnetic waves of two rotating polarizations from which a rotation direction differs, and the receiver separates and receives rotating polarizations in different rotation directions and propagation directions. In addition, describing one example of a form in another embodiment, the transmitter transmits signals using electromagnetic waves of three rotating polarizations from which a propagation direction differs, and the receiver separates and receives rotating polarizations in different rotation directions and propagation directions. In addition, describing one example of a form in another embodiment, the transmitter transmits signals using electromagnetic waves of three rotating polarizations from which a rotation direction and a propagation direction differ, and the receiver separates and receives rotating polarizations in different rotation directions and propagation directions. In addition, describing one example of a form in another embodiment, the transmitter transmits signals using electromagnetic waves of three rotating polarizations from which a rotation direction, a rotation frequency, and a propagation direction differ, and the receiver separates and receives rotating polarizations in different rotation directions, rotational frequencies, and propagation directions.

According to Snell's law, when in an electromagnetic wave, a vector of a reflecting surface and polarization are parallel to each other, a polarization shift is zero, and when the electromagnetic wave is parallel to the vector of the reflecting surface and the polarization, the polarization shift is 180° and the polarization is reversed. Therefore, the rotation direction of the electromagnetic wave of the rotating polarization is reversed when the electromagnetic wave of the rotating polarization is reflected. Since a propagation path due to a plurality of reflected waves formed between the transmitter and the receiver is generally formed by one and a plurality of reflections, when the transmitter transmits the rotating polarization in one direction, the receiver receives the electromagnetic waves of the rotating polarization in different rotating directions, but receives the electromagnetic waves as the incoming waves by two types of propagation paths that do not have overlapping elements with each other, that is, a set of propagation paths with the odd number of reflections and the even number of reflections. Therefore, by using one of the two types of propagation paths, the influence of a specific one propagation path can be deleted. As a result, it is possible to improve the communication quality by removing the influence of the specific propagation path that affects the signal quality.

### [First Embodiment]

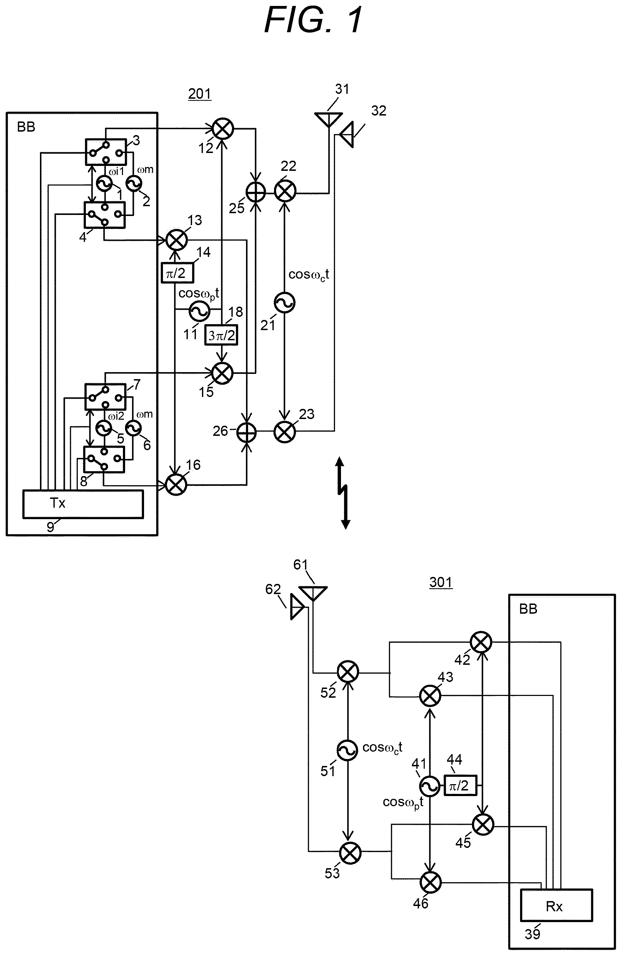

In a first embodiment, an operation of a radio system for reducing an influence of a specific propagation path using rotating polarization and improving communication quality will be described with reference to Figs. 1 to 3. Here, rotating polarization refers to a form of an electromagnetic wave in which a polarization vector rotates at a frequency different from a propagation frequency. In the first embodiment, the rotating polarization can independently control a propagation frequency and a rotation frequency. For example, the rotation frequency can be 1/10 of the propagation frequency, and therefore can be processed even by a general-purpose commercial digital signal processing device.

### <1. System Configuration Example>

Fig. 1 is a diagram for describing an example of a configuration of a radio system for reducing an influence of a specific propagation path using rotating polarization and improving communication quality, according to the present embodiment. A rotating polarization transmitter (referred to as a transmitter) 201 includes information signal generators 1 and 5 and propagation path measurement signal generators 2 and 6. Paired signal switchers 3 and 4 are controlled by a transmission signal processing circuit 9 to switch the information signal generator 1 and the propagation path measurement signal generator 2. Paired signal switchers 7 and 8 are controlled by the transmission signal processing circuit 9 to switch the information signal generator 5 and the propagation path measurement signal generator 6.

Outputs of the signal switchers 3 and 4 are multiplied by multiplying an output cosωₚt of a rotating polarization frequency generator 11 via a rotating polarization frequency 90° phase shift circuit 14 and an output +sinωₚt of the rotating polarization frequency generator 11, respectively, by a first transmission multiplication circuit 12 and a second transmission multiplication circuit 13, respectively, and become first inputs of a first synthesizer 25 and a second synthesizer 26, respectively.

Outputs of the signal switchers 7 and 8 are multiplied by an output -sinωₚt of the rotating polarization frequency generator 11 via a rotating polarization frequency 270° phase shift circuit 18 and an output cosωₚt of the rotating polarization frequency generator 11, respectively, by a third transmission multiplication circuit 15 and a fourth transmission multiplication circuit 16, respectively, and are second inputs of the first synthesizer 25 and a second synthesizer 26, respectively.

The outputs of the first synthesizer 25 and the second synthesizer 26 are up-converted by a first transmitting mixer 22 and a second transmitting mixer 23, respectively, using an output cosω_{c}t of a carrier frequency generation circuit 21, and are spatially radiated to a space as rotating polarization by a first transmitting antenna 31 and a second transmitting antenna 32, respectively, that are spatially orthogonal to each other.

A rotating polarization receiver (referred to as a receiver) 301 includes a first receiving antenna 61 and a second receiving antenna 62 that are spatially orthogonal to each other. Outputs of the first receiving antenna 61 and the second receiving antenna 62 are down-converted by a first receiving mixer 52 and a second receiving mixer 53, respectively, using an output cosω_{c}t of a carrier frequency generation circuit 51.

An output of the first receiving mixer 52 is branched into two, and is multiplied by an output sinωₚt of a rotating polarization frequency generator 41 via a rotating polarization frequency 90° phase shift circuit 44 and an output cosωₚt of the rotating polarization frequency generator 41, respectively, by a first reception multiplication circuit 42 and a second reception multiplication circuit 43, and is input to a reception signal processing circuit 39. An output of the second receiving mixer 53 is branched into two, and is multiplied by the output sinωₚt of the rotating polarization frequency generator 41 via the rotating polarization frequency 90° phase shift circuit 44 and the output cosωₚt of the rotating polarization frequency generator 41, respectively, by a third reception multiplication circuit 45 and a fourth reception multiplication circuit 46, and is input to the reception signal processing circuit 39.

The transmitter 201 can transmit right rotating polarization and left rotating polarization independently and simultaneously using the paired signal switchers 3 and 4 and the paired signal switchers 7 and 8. First, the transmitter 201 transmits the output of the propagation path measurement signal generator 2 or 6 using the right rotating polarization and the left rotating polarization independently.

The signal switchers 3 and 4 of the transmitter 201 have a four-terminal configuration that switches three of the output of the information signal generator 1 and the output of the propagation path measurement signal generator 2 as outputs without input.

The signal switchers 7 and 8 of the transmitter 201 have a four-terminal configuration that switches three of the output of the information signal generator 5 and the output of the propagation path measurement signal generator 6 as outputs without input.

When the transmitter 201 transmits the right rotating polarization and evaluates the propagation path, the signal switchers 3 and 4 are connected to the propagation path measurement signal generator 2, and the signal switchers 7 and 8 have no input. As a result, the right rotating polarization is transmitted from the antennas 31 and 32. When the transmitter 201 transmits the left rotating polarization and evaluates the propagation path, the signal switchers 7 and 8 are connected to the propagation path measurement signal generator 6, and the signal switchers 3 and 4 have no input. As a result, the left rotating polarization is transmitted from the antennas 31 and 32.

Since it is preferable that measurement signals generated by the propagation path measurement signal generators 2 and 6 can be synchronized using a measurement signal on the receiving side, a signal preferably has any periodicity. For example, the signal has a periodicity of "10101010...", "100100100100...", and the like.

### <2. Operation Principle of System>

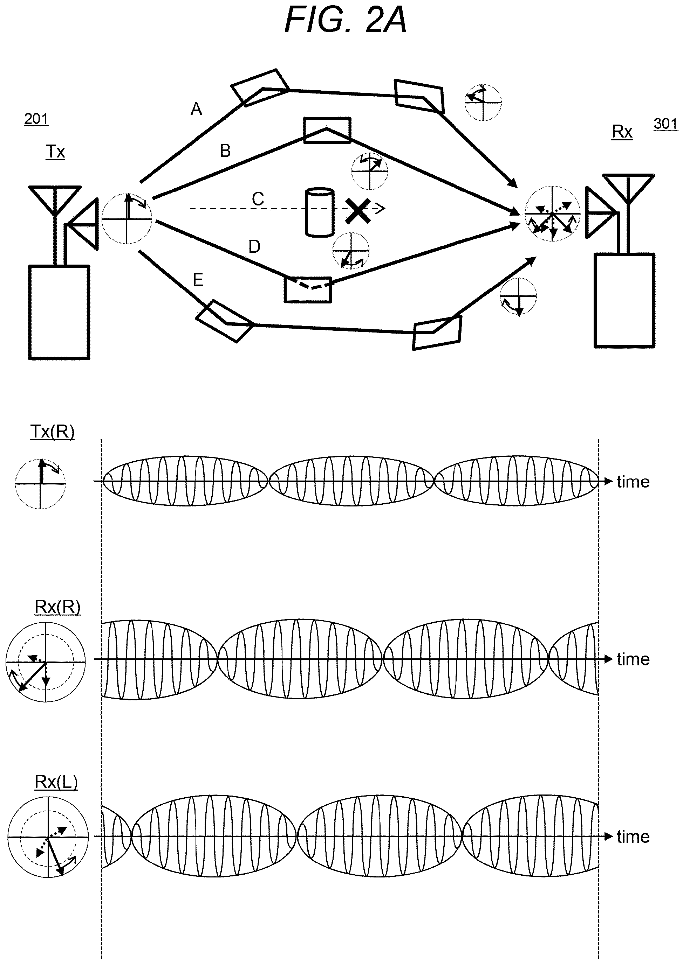

Fig. 2A is a diagram schematically illustrating a change in a polarization state due to the propagation path when a predetermined rotating polarization is transmitted from the transmitter 201 (Tx) to the receiver 301 (Rx). Here, it is assumed that right rotating polarization Tx(R) is transmitted from the transmitter (Tx). In addition, five propagation paths A, B, C, D, and E and reflecting surfaces included in these paths are schematically shown.

As described above, if the rotation direction of the electromagnetic wave of a rotating polarization is reversed when the electromagnetic wave of the rotating polarization is reflected, the receiver (Rx) receives the right rotating polarization by the reflection from the propagation paths A and E twice, and receives the left rotating polarization by the reflection from the propagation paths B and D once. In addition, the propagation path C cannot perform propagation due to obstacles. That is, a radio wave from the transmitter (Tx) received by the receiver (Rx) is reached through any one of a first propagation path group (referred to as "even number of reflection path" for convenience) of even number of reflections including the propagation paths A and E and a second propagation path group (referred to as "odd number of reflection path" for convenience) of odd number of reflections including the propagation paths B and D.

Similarly, even when left rotating polarization Tx(L) is transmitted from the transmitter (Tx), the left rotating polarization is reached through any one of the first propagation path group of even number of reflections including the propagation paths A and E and the second propagation path group of the odd number of reflections including the propagation paths B and D.

As illustrated in Fig. 2A, the receiver 301 (Rx) can independently receive the right rotating polarization Rx (R) and the left rotating polarization Rx (L), respectively. As a result, it is possible to know radio channels corresponding to the propagation paths B and D due to the odd number of reflections and radio channels corresponding to the propagation paths A and E due to the even number of reflections, with respect to clockwise and counterclockwise transmission rotating polarizations.

Therefore, the receiver 301 (Rx) can use a radio channel having good quality by determining whether either the right rotating polarization or the left rotating polarization of the received measurement signal is a good signal and performing communication selecting and using the signal of the good radio channel for communication of a subsequent information signal. As the determination method, an evaluation method usually used for evaluating the communication qualities such as a gain, a signal-to-noise ratio, and an error rate may be adopted. According to this method, by using one of the two types of propagation paths, it is possible to remove the influence of one specific propagation path or a plurality of propagation paths having the different number of reflections.

In the example described with reference to Fig. 2A, M types (M = 1) of independent rotating polarizations are transmitted, and N types (N = 2) of independent rotating polarizations are received at the same time. Two types of independent rotating polarizations are each affected by different propagation paths. By restoring data from one rotating polarization received, M (M = 1) data are transmitted and received.

### <3. Operation Example of System>

As described above, when the system of Fig. 1 is used, it is possible to transmit one rotating polarization using two propagation paths and to separate signals from the two propagation paths. Hereinafter, an operation example of the system of the first embodiment will be described.

### <Example 1: Identifying two types of propagation paths with one type of rotating polarization>

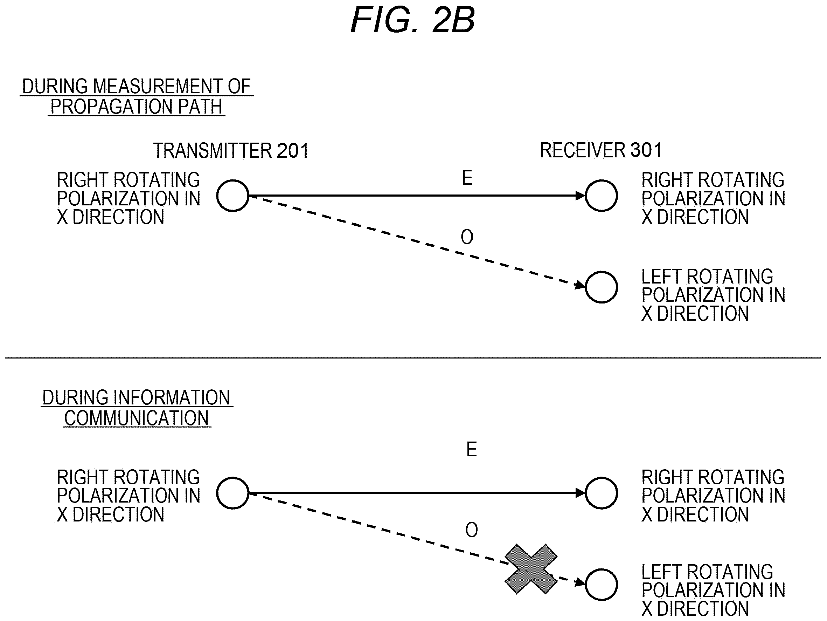

As illustrated in Fig. 2B, during the measurement of the propagation path, the output of the propagation path measurement signal generator 2 (or 6) is transmitted from the transmitter 201 using the right (or left) rotating polarization. The receiver 301 receives the right rotating polarization and the left rotating polarization independently, evaluates each quality, and selects either the right rotating polarization or the left rotating polarization. By this selection, one of the even number of reflection path E and the odd number of reflection path O is selected. This is an example in which M (M = 1) type of independent rotating polarizations are transmitted, N (N = 2) types of independent rotating polarizations are received at the same time, and M (M = 1) data are transmitted and received.

During the information communication, the output of the information signal generator 1 (or 5) is transmitted from the transmitter 201 using the right (or left) rotating polarization. The receiver 301 receives the selected right rotating polarization or left rotating polarization and demodulates data. In the case of Fig. 2B, the influence of the odd number of reflection path O is removed using only the signal of the right rotating polarization via the selected even number of reflection path E, for example.

In this example, since the transmitting side uses only the right or left rotating polarization, one of the two propagation path measurement signal generators 2 and 6, one of the information signal generators 1 and 5, and one of the signal switchers 3, 4 and 7 and 8 may be omitted.

Note that when the structure of the propagation path is universal, the evaluation of the propagation path by the test may be performed once, but when the environment of the propagation path changes, it is preferable to periodically measure the propagation path according to the use situation.

### <Example 2: Identifying Two Types of Propagation Paths with Two Type of Rotating Polarization>

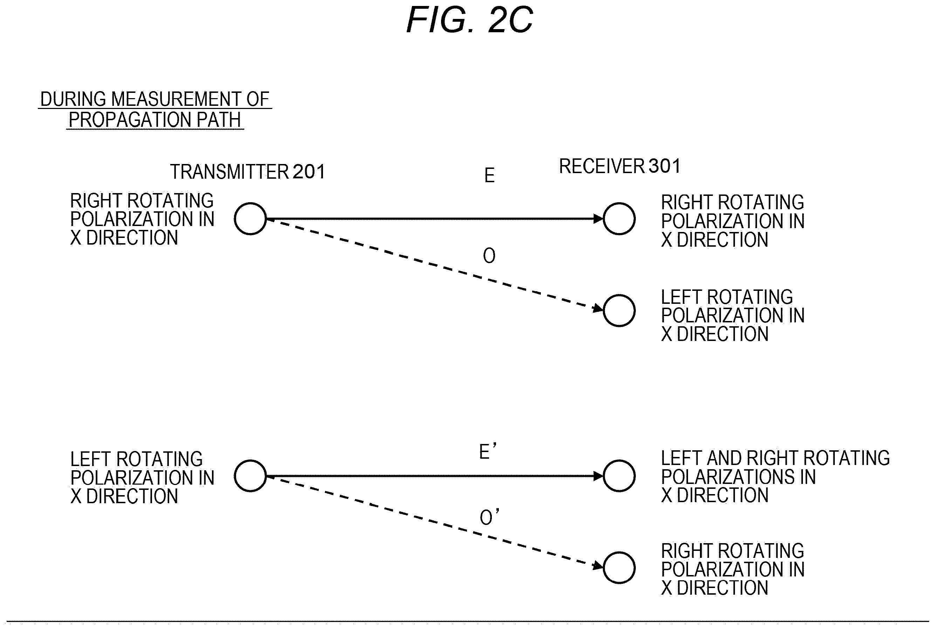

As illustrated in Fig. 2C, the outputs of the propagation path measurement signal generators 2 and 6 are transmitted from transmitter 201 by using the right and left rotating polarizations independently in time. The receiver 301 receives the right rotating polarization and the left rotating polarization independently, evaluates each quality, and selects either the right rotating polarization or the left rotating polarization.

During the measurement of the propagation path, when the transmitter 201 transmits the right rotating polarization, the receiver 301 receives the right rotating polarization and the left rotating polarization independently, so it is possible to distinguish between a signal of the even number of reflection path E transmitting the right rotating polarization as the right rotating polarization and a signal of the odd number of reflection path O transmitting the right rotating polarization as the left rotating polarization.

During the measurement of the propagation path, when the transmitter 201 transmits the left rotating polarization, the receiver 301 receives the left rotating polarization and the right rotating polarization independently, so it is possible to distinguish between a signal of an even number of reflection path E' transmitting the left rotating polarization as the left rotating polarization and a signal of an odd number of reflection path O' transmitting the left rotating polarization as the right rotating polarization.

At this time, since the right rotating polarization and the left rotating polarization are spatially symmetrical, the even number of reflection path E and the even number of reflection path E' are considered equivalent, and the odd number of reflection path O and the odd number of reflection path O' is considered equivalent. Therefore, in this case, two types of rotating polarizations are transmitted, and signals from two types (two sets) of propagation paths are received with two types of rotating polarizations. In this method, one propagation path can be evaluated twice.

In the above method, since the right and left rotating polarizations are used independently in time, the propagation path measurement signal generators 2 and 6 are commonly used and thus only one of the propagation path measurement signal generators 2 and 6 can be provided. Further, by connecting all the signal switchers 3, 4, 7, and 8 to the propagation path measurement signal generators 2 and 6, the right rotating polarization and the left rotating polarization can be transmitted at the same time during the test. In this case, if the signals of the propagation path measurement signal generators 2 and 6 are, for example, different signals that are orthogonal to each other, these signals can be separated and evaluated on the receiver 301 side.

During the information communication, as in Example 1, the transmitter 201 transmits the right rotating polarization and the left rotating polarization independently in time.

### <Example 3: Example of Duplication or Parallelization>

Since the process during the test is the same as Example 1 and Example 2, the process during the data transmission will be described. For the communication of the information signal, in the circuit configuration of Fig. 1, the information signal generators 1 and 5 are provided independently for the right rotating polarization and the left rotating polarization. The right rotating polarization and the left rotating polarization can be transmitted at different timings as in Example 1 and Example 2, but by connecting the signal switchers 3, 4, 7, and 8 to all the information signal generators 1 and 5, the right rotating polarization and the left rotating polarization can be transmitted at the same time.

When the right rotating polarization and the left rotating polarization are transmitted at the same time, if the signals of the information signal generators 1 and 5 are the same, duplex is possible and reliability is increased. In addition, if the signals of the information signal generators 1 and 5 are different, parallelization is possible and the communication rate is increased. These may be selected according to applications.

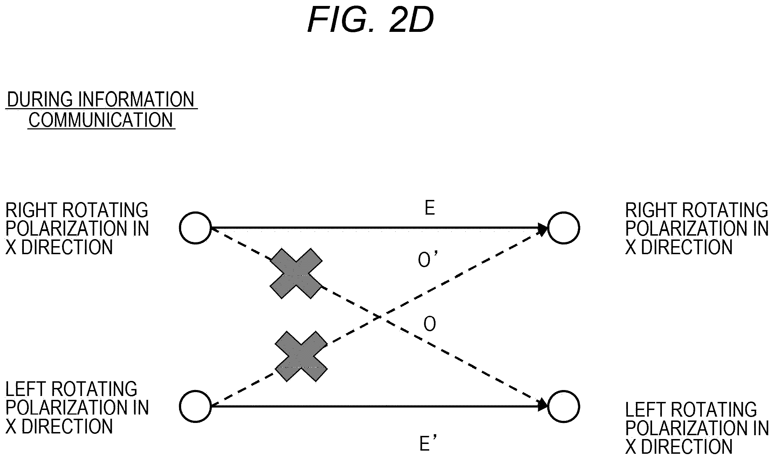

As illustrated in Fig. 2D, during the information communication, when the transmitter 201 transmits the right rotating polarization and the left rotating polarization at the same time, the right rotating polarization received by receiver 301 includes both one (one passing through the even number of reflection path E) propagated with the right rotating polarization as the right rotating polarization and one (one passing through the odd number of reflection path O) propagated with the left rotating polarization as the right rotating polarization. In addition, the left rotating polarization received by receiver 301 includes both one (one passing through the even number of reflection path E') propagated with the left rotating polarization as the left rotating polarization and one (one passing through the odd number of reflection path O') propagated with the right rotating polarization as the left rotating polarization. Therefore, it is necessary to separate these rotating propagations. For this, the conventional multiplexing communication technologies, that is, time division multiplexing, frequency division multiplexing, code division multiplexing, or the like may be applied. For example, if the signals generated by the information signal generators 1 and 5 is made orthogonal codes or the like, two signals in the right (left) rotating polarization can be distinguished.

Further, these two signals pass through different propagation paths, and therefore are subjected to change (radio channel) in different amplitude and phase difference at the reception point. If this change is used, the two signals can be distinguished without using the orthogonal code or the like. This principle will be described below.

Since an electromagnetic wave is a vector of a transverse wave, two polarizations spatially orthogonal to each other can be transmitted independently and simultaneously. The transmitter 201 in Fig. 1 can transmit the same signal as the rotating polarization using a cos wave for vertical polarization and a sin wave for horizontal polarization. Originally, two polarizations can be transmitted at the same time, so a first signal and a second signal can each be transmitted independently and at the same time by using a cos wave for a vertical polarization and a sin wave for a horizontal polarization and using a cos wave for a vertical polarization and a -sin wave for a horizontal polarization. Both the polarizations become the right and left rotating polarizations.

In the transmission method using the above rotating polarization, A and B signals are transmitted independently in ordinary electromagnetic waves, whereas A + B and A - B signals are transmitted independently. This is more correct than the principle of linear combination. The receiver 301 can obtain signals transmitted by a cos wave and a sin wave from the orthogonal antennas 61 and 62, respectively, and therefore can independently obtain the signal transmitted with the right rotating polarization and the signal transmitted with the left rotating polarization by taking the sum and difference of the respective signals.

Here, the state of the propagation path is considered. It is assumed that a signal α is transmitted using only counterclockwise circular polarization. The receiver 301 obtains signals which are synthesized at a reception point via the first propagation path group (even number of reflection path E) of the even number of reflections and are represented by αSrr using an amount (which is called a radio channel) Srr whose phase and amplitude are represented by a complex number. In addition, the receiver 301 obtains signals which are synthesized at a reception point via the second propagation path group (odd number of reflection path O) of the odd number of reflections and are represented by αSrl using an amount Srl whose phase and amplitude are represented by a complex number.

Next, it is assumed that a signal α is transmitted using only counterclockwise circular polarization. The receiver 301 obtains signals which are synthesized at a reception point via the first propagation path group (even number of reflection path E') of the even number of reflections and are represented by αSll using an amount Sll whose phase and amplitude are represented by a complex number. In addition, the receiver 301 obtains signals which are synthesized at a reception point via the second propagation path group (odd number of reflection path O') of the odd number of reflections and are represented by αSlr using an amount Slr whose phase and amplitude are represented by a complex number.

Therefore, if the transmitter 201 and the receiver 301 share a value of α, the receiver 301 can know values of radio channels Srr, Srl, Sll, and Slr that are unique values to the propagation path. This operation can be performed by transmitting the signal α using the propagation path measurement signal generator 2 and performing transmission and reception using a predetermined protocol during the measurement of the propagation path. The receiver 301 is assumed to store data of the signal α separately.

In the case of parallelizing or duplicating the system, if a β signal is transmitted with the right rotating polarization and at the same time a γ signal is transmitted with left rotating polarization, the receiver obtains P = βSrr + γSlr as the received signal of the right rotating polarization and at the same time obtains Λ = βSrl + γSll as the received signal of the left rotating polarization. Therefore, the signals β and γ simultaneously transmitted by linear calculation can be obtained using the values of Srr, Srl, Sll, Slr and the received signals P and A previously obtained. Such processing can be performed by calculation in software in the reception signal processing circuit 39 of the receiver 301.

As described above, the receiver 301 (Rx) can use the radio channels to divide the outputs of the information signal generators 1 and 5 transmitted by the transmitter 201 (Tx) at the same time using the right rotating polarization Tx (R) and the left rotating polarization Tx (L) into the incoming waves related to the propagation path by the odd number of reflections and the propagation path by the even number of reflections and receive the outputs. For this reason, the outputs of information signal generator 1 and 5 can be obtained at the same time by removing the influence of the specific propagation path, so there is an effect of improving the communication quality by not using the specific propagation path among the plurality of propagation paths.

In this example of Fig. 2D, during the information communication, M (M = 2) types of independent rotating polarizations are transmitted, N (N = 2) types of independent rotating polarizations are received at the same time, and M (M = 2) data are transmitted and received. For example, if the even number of reflection paths E and E' are a better propagation path, the data transmitted with the right rotating polarization are restored from the received right rotating polarization, and the data with the left rotating polarization are restored from the received left rotating polarization.

In the above description, the transmission direction is described as an X direction, but the type of rotating polarizations can be increased by increasing the number of combinations of the rotation direction and the propagation direction (transmission direction or reception direction). Since the rotation direction of the rotating polarization has two directions, that is, right and left directions, and three directions that are orthogonal to each other in 3 dimension, for example, it is possible to increase the number of propagation paths that can be substantially identified by increasing the types of rotating polarization such as M = 2 × 3 = 6, N = 2 × 3 = 6. In this case, each of the N types of rotating polarizations includes signals of M types of rotating polarization received via different propagation paths, the separation is performed by the above-described calculation during the restoration of the data, and the data are restored via a good propagation path.

### <4. Example of Communication Protocol>

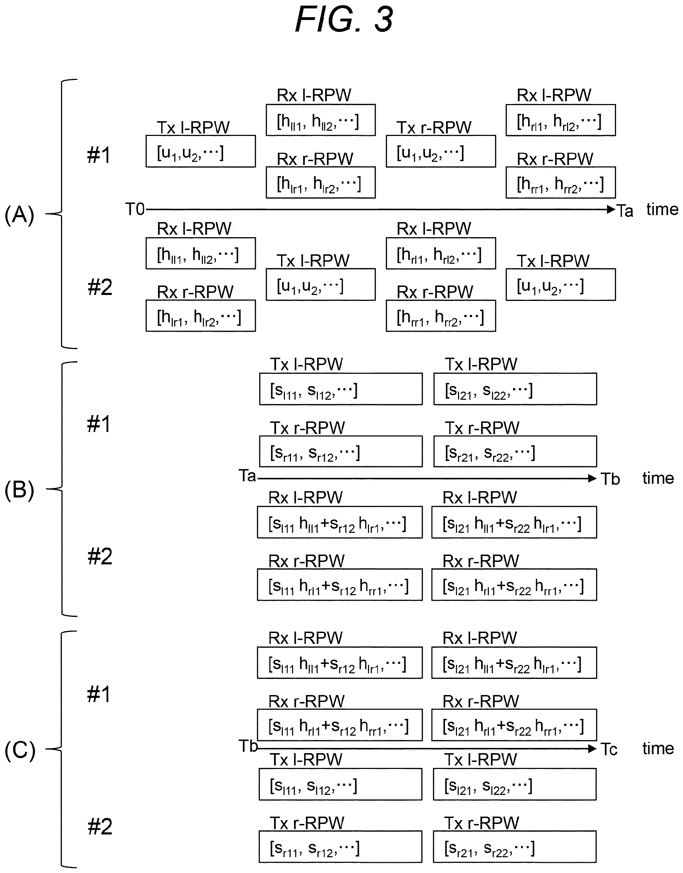

Fig. 3 is a diagram for explaining an example of a communication protocol of a radio system for reducing an influence of a specific propagation path using rotating polarization and improving communication quality, and is an example of a protocol related to communication using rotating polarization having different rotation directions. In the first embodiment, a pair of radio devices is distinguished by #1 and #2. Radio devices #1 and #2 correspond to, for example, those provided with the configurations of both the transmitter 201 and the receiver 301 in Fig. 1

Referring to (A) of Fig. 3, first, the radio device #1 transmits left rotating polarization (Tx 1-RPW). Since the propagation speed of the electromagnetic wave is a speed of light, the radio device #2 substantially simultaneously receives right rotating polarization (Rx r-RPW) and left rotating polarization (Rx 1-RPW) independently using the plurality of propagation paths formed between the transmitter and the receiver as a set of two propagation paths that have no common elements.

At this time, the radio device #1 transmits information uₙ (for example, all 1 or 1010...and the like) that is agreed with radio device #2 in advance. In the radio device #2, information hₗₗₙ is obtained from the received left rotating polarization, and information hₗᵣₙ is obtained from the right rotating polarization. The information hₗₗₙ and the information hₗᵣₙ can be considered to represent the influence of the propagation path on the left rotating polarization and the right rotating polarization. Therefore, the radio device #2 stores in what time change the information uₙ that is agreed in advance is received in one period of rotating polarization. Next, the radio devices #1 and #2 exchange the roles of transmission and reception and perform the same communication.

Next, the radio device #1 performs similar communication using right rotating polarization (Tx r-RPW) having different rotation directions. The above processing corresponds to the processing illustrated in Fig. 2C. Next, the radio devices #1 and #2 exchange the roles of transmission and reception and perform the same communication. By this series of four types of communication, the radio devices #1 and #2 can know what changes are received from the environment when performing communication with the left rotating polarization and the right rotating polarization which are independent of each other.

Here, for the sake of explanation, the radio device #1 is assumed to transmit the right rotating polarization and the left rotating polarization independently in time, but can transmit the right rotating polarization and the left rotating polarization simultaneously by adopting the orthogonal code and the like as described above.

Next, referring to (B) of Fig. 3, the radio device #1 transmits two types of information (S₁ₙ, S₂ₙ) using the left rotating polarization (Tx 1-RPW) and the right rotating polarization (Tx r-RPW) that are orthogonal to each other at the same time. The radio device #2 can use the effect of the propagation environment (information hₗₗₙ, information hₗᵣₙ) when the left rotating polarization and the right rotating polarization are used alone to separate and regenerate the received signals (S₁ₙ and S₂ₙ) by the left rotating polarization (Tx 1-RPW) and the transmitted signal (S₁ₙ, and S₂ₙ) by the right rotating polarization (Tx r-RPW) that the radio device #1 transmits from the received signal by the left rotating polarization (Rx 1-RPW) and the received signal by the right rotating polarization (Rx r-RPW). The above processing corresponds to the processing illustrated in Fig. 2D. The principle of separation/regeneration is as described in <3. Operation Example of System: Example 3>.

When the radio transmission of information from the radio device #1 to the radio device #2 is completed, the radio transmission of information from the radio device #2 to the radio device #1 is performed as illustrated in (C) of Fig. 3. Thereafter, the same operation is repeated until the transmission of all information is completed. According to this example, different types of information S₁ₙ and S₂ₙ can be transmitted using two types of rotating polarization orthogonal to each other at the same time, so that there is an effect of increasing the transmission capacity. In addition, the same information can be transmitted using two types of rotating polarizations at the same time, and the effect of increasing reliability can also be obtained.

### [Second Embodiment]

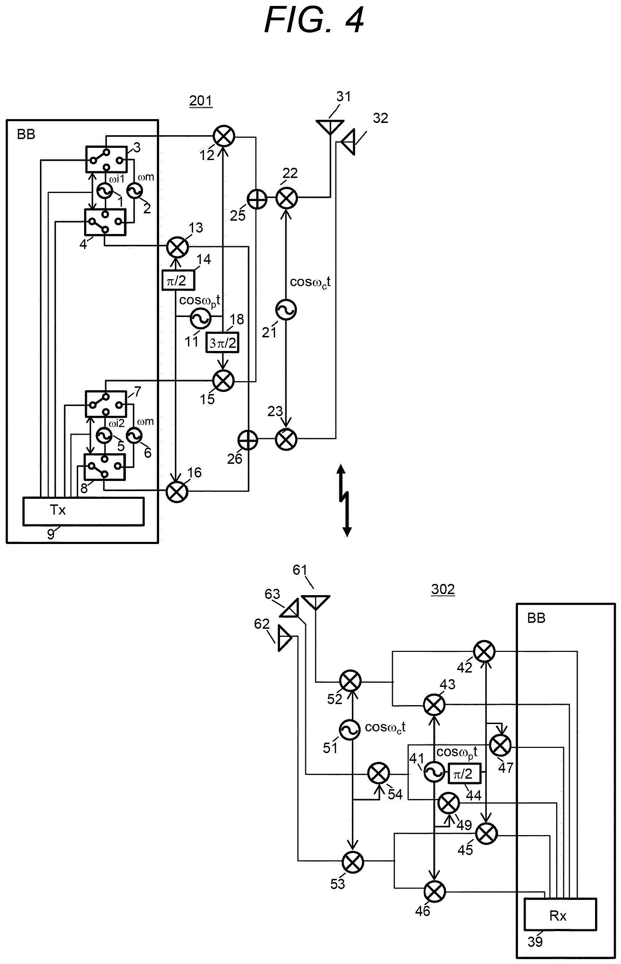

In a second embodiment, an operation of another radio system for reducing an influence of a specific propagation path using rotating polarization and improving communication quality will be described with reference to Fig. 4. The second embodiment is an example in which an incoming direction of rotating polarization that can be received on a receiver side is increased.

Fig. 4 is a diagram for describing an example of a configuration of a radio system for reducing an influence of a specific propagation path using rotating polarization and improving communication quality, according to the second embodiment. A transmitter 201 is the same as in Fig. 1.

A receiver 302 includes a third receiving antenna 63 in addition to a first receiving antenna 61 and a second receiving antenna 62 that are spatially orthogonal to each other. Hereinafter, differences from the configuration of the receiver 301 in Fig. 1 will be described.

An output of the third receiving antenna 63 is down-converted by a third receiving mixer 54 using an output of a carrier frequency generation circuit 51. An output of the third receiving mixer 54 is branched into two, and is multiplied by an output of a rotating polarization frequency generator 41 via a rotating polarization frequency 90° phase shift circuit 44 and an output of the rotating polarization frequency generator 41, respectively, by a fifth reception multiplication circuit 47 and a sixth reception multiplication circuit 49, and is input to a reception signal processing circuit 39.

First, the transmitter 201 transmits an output of a propagation path measurement signal generator 2 or 6 using right rotating polarization and left rotating polarization independently, and the receiver 301 receives the right rotating polarization and the left rotating polarization independently.

As a result, it is possible to know radio channels corresponding to propagation paths due to the odd number of reflections and radio channels corresponding to the propagation paths of the even number of reflections, with respect to clockwise and counterclockwise transmission rotating polarizations. The receiver 302 can use the radio channels to divide the outputs of the information signal generators 1 and 5 transmitted by the transmitter 201 at the same time using the right rotating polarization and the left rotating polarization into the incoming waves related to the propagation path by the odd number of reflections and the propagation path by the even number of reflections and receive the outputs.

Furthermore, the receiver 302 can direct a vector of a receiving antenna in a specific direction by three receiving antennas 61, 62, and 63 that are spatially orthogonal to each other. As a result, as illustrated in Fig. 2A, the vector of the receiving antenna can be matched with a propagation direction of an electromagnetic wave reaching the receiver 302 via a specific propagation path. Since the polarization of the electromagnetic wave is perpendicular to the propagation direction, the influence of the electromagnetic wave reaching the receiver via the specific propagation path can be reduced by matching the vector of the receiving antenna with the propagation direction of the electromagnetic wave.

According to the second embodiment, the transmitter 201 can transmit the right rotating polarization or the left rotating polarization in one direction (for example, X direction), and the receiver 302 can independently receive the right rotating polarization or the left rotating polarization from three directions (X, Y, Z directions). In this case, one type of rotating polarization is received as six types of rotating polarization, and six propagation paths can be identified. Note that the combination of the rotation direction of the rotating polarization and the propagation direction is referred to as a type, and at least one of the rotation direction and the propagation direction is different is referred to as different types of rotating polarizations.

According to the second embodiment, the ability to remove the influence of the specific propagation path is improved compared to the embodiment of Fig. 1, and as a result communication quality can be improved, and the number of independent propagation paths increases for communication, and as a result transmission capacity can be increased.

### [Third Embodiment]

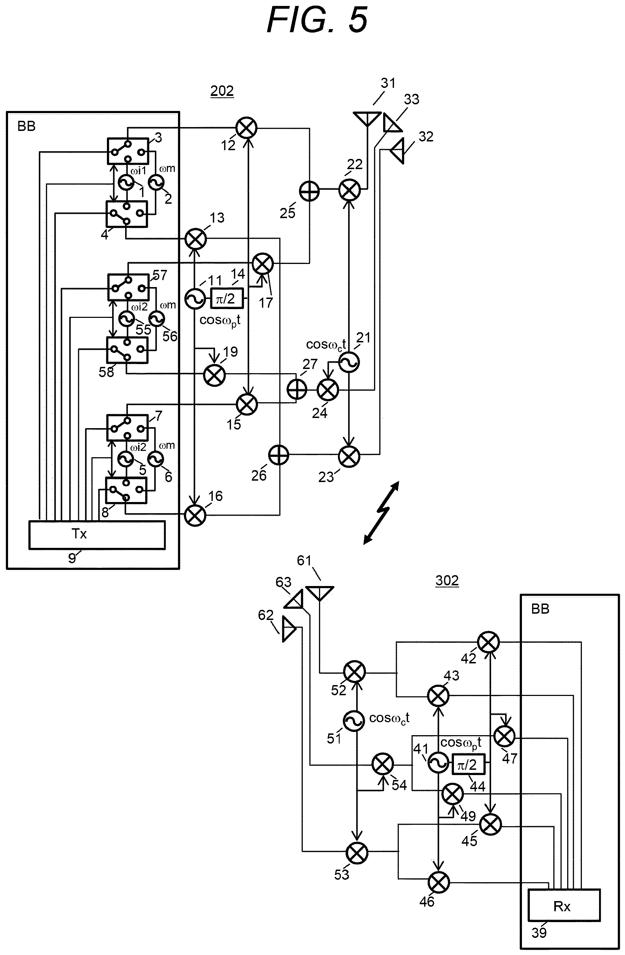

Fig. 5 is a diagram for describing an example of a configuration of another radio system for reducing an influence of a specific propagation path using rotating polarization and improving communication quality. A transmitter 202 includes information signal generators 1, 5, and 55 and propagation path measurement signal generators 2, 6, and 56. Paired signal switchers 3 and 4 are controlled by a transmission signal processing circuit 9 to switch the information signal generator 1 and the propagation path measurement signal generator 2. Paired signal switchers 7 and 8 are controlled by the transmission signal processing circuit 9 to switch the information signal generator 5 and the propagation path measurement signal generator 6. Paired signal switchers 57 and 58 are controlled by a transmission signal processing circuit 9 to switch the information signal generator 55 and the propagation path measurement signal generator 56.

Outputs of the signal switchers 3 and 4 are multiplied by an output of a rotating polarization frequency generator 11 via a rotating polarization frequency 90° phase shift circuit 14 and an output of the rotating polarization frequency generator 11, respectively, by a first transmission multiplication circuit 12 and a second transmission multiplication circuit 13, respectively, and become inputs of a first synthesizer 25 and a second synthesizer 26, respectively. Outputs of the signal switchers 7 and 8 are multiplied by the output of the rotating polarization frequency generator 11 via the rotating polarization frequency 90° phase shift circuit 14 and the output of the rotating polarization frequency generator 11, respectively, by a third transmission multiplication circuit 15 and a fourth transmission multiplication circuit 16, respectively, and become inputs of a third synthesizer 27 and the second synthesizer 26, respectively. Outputs of the signal switchers 57 and 58 are multiplied by the output of the rotating polarization frequency generator 11 via the rotating polarization frequency 90° phase shift circuit 14 and the output of the rotating polarization frequency generator 11, respectively, by a fifth transmission multiplication circuit 17 and a sixth transmission multiplication circuit 19, respectively, and become inputs of the first synthesizer 25 and the third synthesizer 27, respectively.

Outputs of the first synthesizer 25, the second synthesizer 26, and the third synthesizer 27 are up-converted by a first transmitting mixer 22, a second transmitting mixer 23, and a third transmitting mixer 24 using an output of a carrier frequency generation circuit 21, and are spatially radiated to a space by a first transmitting antenna 31, a second transmitting antenna 32, and a third transmitting antenna 33, respectively, that are spatially orthogonal to each other.

The receiver 302 is the same as the receiver in Fig. 4. The transmitter 202 can use the paired signal switchers 3 and 4, the paired signal switchers 7 and 8, and the paired signal switchers 57 and 58 to transmit each of three right rotating polarizations whose propagation directions are orthogonal to each other independently and at the same time.

First, the transmitter 202 transmits the output of the propagation path measurement signal generator 2, 6, or 56 independently using each of three right rotating polarizations whose propagation directions are orthogonal to each other. As a result, it is possible to know radio channels for three right rotating polarizations that are orthogonal to each other. The receiver 302 can use these radio channels to divide the outputs of the information signal generators 1, 5, and 55 that the transmitter 202 transmits at the same time using the three right rotating polarizations orthogonal to each other into an incoming wave related to three right rotating polarizations orthogonal to each other and receive the outputs. Similarly, the transmission is performed even with the left rotating polarization.

The receiver 302 can direct a vector of a receiving antenna in a specific direction by three receiving antennas 61, 62, and 63 that are spatially orthogonal to each other. As a result, the vector of the receiving antenna can be matched with a propagation direction of an electromagnetic wave reaching the receiver 302 via a specific propagation path. Since the polarization of the electromagnetic wave is perpendicular to the propagation direction, the influence of the electromagnetic wave reaching the receiver via the specific propagation path can be reduced by matching the vector of the receiving antenna with the propagation direction of the electromagnetic wave.

According to the third embodiment, since the influence of the specific propagation path can be removed to obtain the outputs of the information signal generators 1, 5, and 55 at the same time, the effect of improving the communication quality and increasing the transmission capacity is obtained.

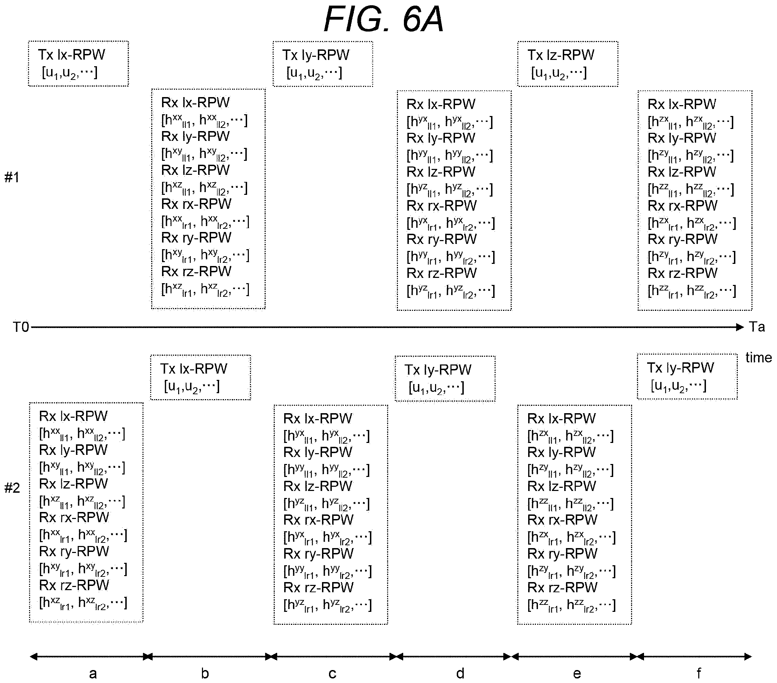

Figs. 6A to 6C are diagrams for describing an example of a communication protocol for reducing an influence of a specific propagation path using rotating polarization and improving communication quality according to the present embodiment. Here, two rotation directions and six types of rotating polarization having three propagation directions which are spatially orthogonal to each other are used.

In the third embodiment, a pair of radio devices is distinguished by #1 and #2, and each radio device includes three antennas that are spatially orthogonal to each other. It is assumed that the radio devices #1 and #2 each have configurations of both transmitter 202 and receiver 302.

In Fig. 6A, first, the radio device #1 radiates left rotating polarization (Tx lx-RPW) in a first direction (x) and transmits a signal. Since a propagation speed of an electromagnetic wave is a speed of light, the radio device #2 substantially simultaneously uses received signals from three antennas that are spatially orthogonal to each other and receives right rotating polarizations (Rx rx-RPW, Rx ry-RPW, and Rx rz-RPW) and left rotating polarizations (Rx lx-RPW, Rx ly-RPW, Rx lz-RPW) (period a) with respect to three directions independent from each other.

At this time, the radio device #1 transmits information (for example, all 1 or 1010...and the like) that is agreed with radio device #2 in advance. The radio device #2 stores in what time change the information agreed in advance is received in one period of rotating polarization in each of three directions in spaces orthogonal to each other. Next, the radio devices #1 and #2 exchange the roles of transmission and reception and perform the same communication (period b). A similar process is performed in a second direction (y) and a third direction (z) (periods c to f).

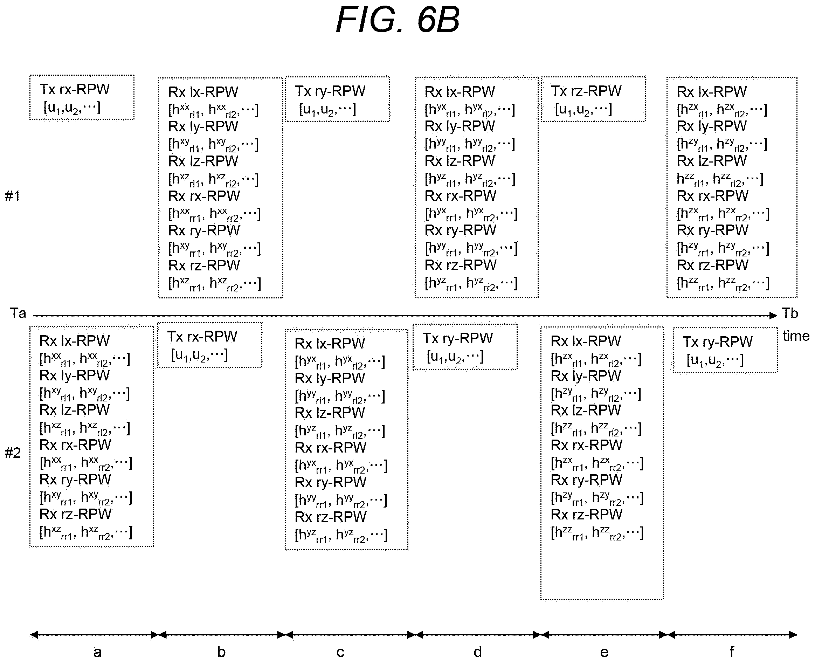

Next, in Fig. 6B, the radio device #1 performs similar communication by irradiating right rotating polarization (Tx rx-RPW) having different rotating polarizations in the first direction (x). Next, the radio devices #1 and #2 exchange the roles of transmission and reception and perform the same communication. In addition, a similar process is performed on the second direction (y) and the third direction (z) (periods c to f).

By this series of six types of communication, the radio device #1 and the radio device #2 can know what changes are received in each of three directions in spaces orthogonal to each other from the environment when performing communication with the left rotating polarization and the right rotating polarization which are independent of each other. That is, the transmitting side transmits six types (two rotation directions × three transmission directions) of rotating polarizations, and the receiving side receives the rotating polarizations with six types (two rotation directions × three reception directions) of rotating polarizations for transmission of one rotating polarization. Since the right rotating polarization and the left rotating polarization are spatially symmetric, in this case, eighteen propagation paths are distinguished.

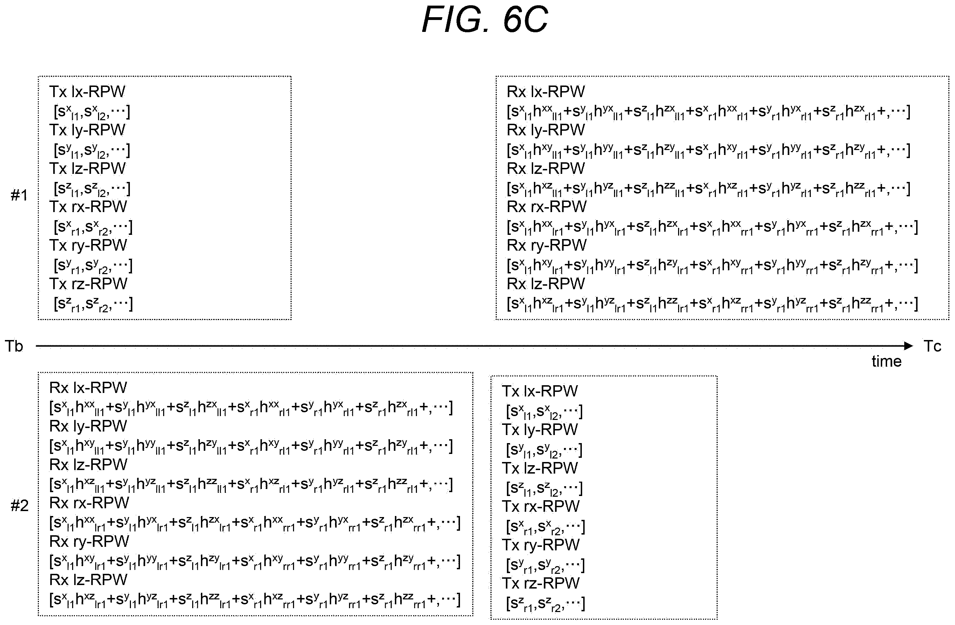

Next, in Fig. 6C, the radio device #1 transmits a total of six types of information using simultaneously the left rotating polarization and the right rotating polarization that are spatially orthogonal to each other. The radio device #2 can use the effect of the propagation environment when the left rotating polarization and right rotating polarization are used alone in three directions in spaces orthogonal to each other to separate and regenerate a total of six types of signals transmitted by the radio device #1 using each of the left rotating polarization and the right rotating polarization in three directions in spaces orthogonal to each other from the received signal by the left rotating polarization and the received signal by the right rotating polarization.

When the radio transmission of information from the radio device #1 to the radio device #2 is completed, the radio transmission of information from the radio device #2 to the radio device #1 is performed. Thereafter, the same operation is repeated until the transmission of all information is completed.

### [Fourth Embodiment]

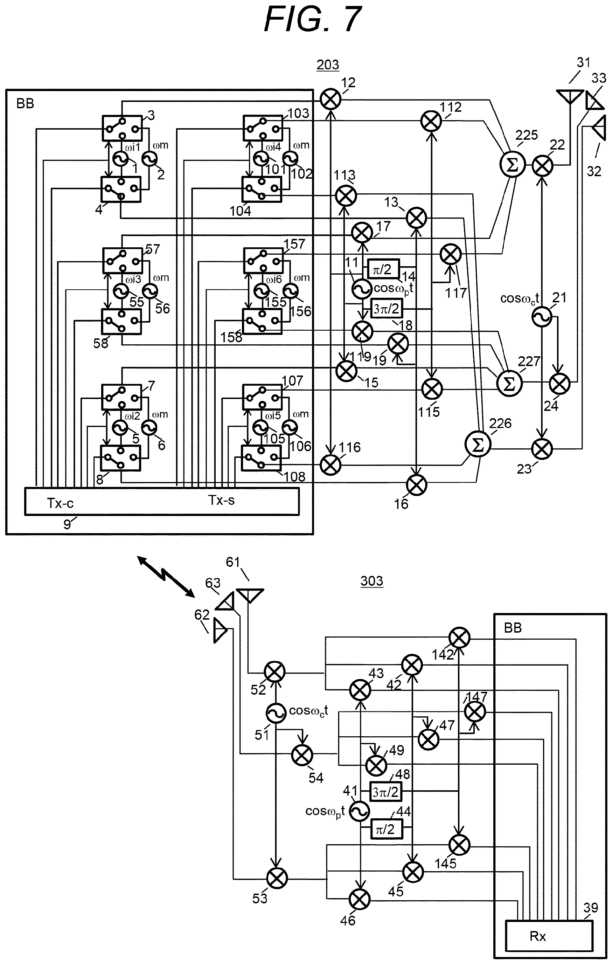

Fig. 7 illustrates an example of a configuration of another radio system for reducing an influence of a specific propagation path using rotating polarization and improving communication quality.

A transmitter 203 includes information signal generators 1, 5, 55, 101, 105, and 155 and propagation path measurement signal generators 2, 6, 56, 102, 106, and 156. Paired signal switchers 3 and 4 are controlled by a transmission signal processing circuit 9 to switch the information signal generator 1 and the propagation path measurement signal generator 2. Paired signal switchers 7 and 8 are controlled by the transmission signal processing circuit 9 to switch the information signal generator 5 and the propagation path measurement signal generator 6. Paired signal switchers 57 and 58 are controlled by a transmission signal processing circuit 9 to switch the information signal generator 55 and the propagation path measurement signal generator 56.

Outputs of the signal switchers 3 and 4 are multiplied by an output of a rotating polarization frequency generator 11 and an output of the rotating polarization frequency generator 11 via a rotating polarization frequency 90° phase shift circuit 14, respectively, by a first transmission multiplication circuit 12 and a second transmission multiplication circuit 13, respectively, and become inputs of a first four synthesizer 225 and a second four synthesizer 226, respectively. Outputs of the signal switchers 7 and 8 are multiplied by an output of a rotating polarization frequency generator 11 and an output of the rotating polarization frequency generator 11 via the rotating polarization frequency 90° phase shift circuit 14, respectively, by a third transmission multiplication circuit 15 and a fourth transmission multiplication circuit 16, respectively, and become inputs of a third four synthesizer 227 and the second four synthesizer 226, respectively. Outputs of the signal switchers 57 and 58 are multiplied by the output of the rotating polarization frequency generator 11 and the output of the rotating polarization frequency generator 11 via a rotating polarization frequency 90° phase shift circuit 14, respectively, by a fifth transmission multiplication circuit 17 and a sixth transmission multiplication circuit 19, respectively, and become inputs of a first four synthesizer 225 and the third four synthesizers 227, respectively.

Paired signal switchers 103 and 104 are controlled by a transmission signal processing circuit 9 to switch the information signal generator 101 and the propagation path measurement signal generator 102. Paired signal switchers 107 and 108 are controlled by a transmission signal processing circuit 9 to switch the information signal generator 105 and the propagation path measurement signal generator 106. Paired signal switchers 157 and 158 are controlled by the transmission signal processing circuit 9 to switch the information signal generator 155 and the propagation path measurement signal generator 156.

Outputs of the signal switchers 103 and 104 are multiplied by an output of the rotating polarization frequency generator 11 via a rotating polarization frequency 270° phase shift circuit 18 and the output of the rotating polarization frequency generator 11, respectively, by a seventh transmission multiplication circuit 112 and an eighth transmission multiplication circuit 113, respectively, and become inputs of the first four synthesizer 225 and the second four synthesizer 226, respectively. Outputs of the signal switchers 107 and 108 are multiplied by the output of the rotating polarization frequency generator 11 via the rotating polarization frequency 270° phase shift circuit 18 and the output of the rotating polarization frequency generator 11, respectively, by a ninth transmission multiplication circuit 115 and a tenth transmission multiplication circuit 116, respectively, and become inputs of the third four synthesizer 227 and the second four synthesizer 226, respectively. Outputs of the signal switchers 157 and 158 are multiplied by an output of the rotating polarization frequency generator 11 via a rotating polarization frequency 270° phase shift circuit 18 and the output of the rotating polarization frequency generator 11, respectively, by an eleventh transmission multiplication circuit 117 and a twelfth transmission multiplication circuit 119, respectively, and become inputs of the first four synthesizer 225 and the third four synthesizer 227, respectively.

Outputs of the first four synthesizer 225, the second four synthesizer 226, and the third four synthesizer 227 are up-converted using an output of a carrier frequency generation circuit 21 by a first transmitting mixer 22, a second transmitting mixer 23, and a third transmitting mixer 24, respectively.. The converted signals are radiated into a space by the first transmitting antenna 31, the second transmitting antenna 32, and the third transmitting antenna 33 which are spatially orthogonal to each other.

A receiver 303 includes a first receiving antenna 61, a second receiving antenna 62, and a third receiving antenna 63 that are spatially orthogonal to each other. Outputs of the first receiving antenna 61, the second receiving antenna 62, and the third receiving antenna 63 are down-converted using the output of the carrier frequency generation circuit 51 by the first receiving mixer 52, the second receiving mixer 53, and the third receiving mixer 54, respectively.

An output of the first receiving mixer 52 is divided into three branches, and is multiplied by an output of a rotating polarization frequency generator 41 via a rotating polarization frequency 90° phase shift circuit 44, an output of the rotating polarization frequency generator 41, and an output of the rotating polarization frequency generator 41 via a rotating polarization frequency 270° phase shift circuit 48 by a first reception multiplication circuit 42, a second reception multiplication circuit 43, and a seventh reception multiplication circuit 142, respectively, and are input to a reception signal processing circuit 39.

An output of the second receiving mixer 53 is divided into three branches, and is multiplied by the output of the rotating polarization frequency generator 41 via the rotating polarization frequency 90° phase shift circuit 44, the output of the rotating polarization frequency generator 41, and the output of the rotating polarization frequency generator 41 via the rotating polarization frequency 270° phase shift circuit 48 by a third reception multiplication circuit 45, a fourth reception multiplication circuit 46, and an eighth reception multiplication circuit 145, respectively, and are input to the reception signal processing circuit 39.

An output of the third receiving mixer 54 is divided into three branches, and is multiplied by the output of the rotating polarization frequency generator 41 via the rotating polarization frequency 90° phase shift circuit 44, the output of the rotating polarization frequency generator 41, and the output of the rotating polarization frequency generator 41 via the rotating polarization frequency 270° phase shift circuit 48 by a fifth reception multiplication circuit 47, a sixth reception multiplication circuit 49, and a ninth reception multiplication circuit 147, respectively, and is input to the reception signal processing circuit 39.

The transmitter 203 can use the paired signal switchers 3 and 4, the paired signal switchers 7 and 8, and the paired signal switchers 57 and 58 to transmit each of three right rotating polarizations whose propagation directions are orthogonal to each other independently and at the same time. In addition, the transmitter 203 can use the paired signal switchers 103 and 104, the paired signal switchers 107 and 108, and the paired signal switchers 157 and 158 to transmit each of three left rotating polarizations whose propagation directions are orthogonal to each other independently and at the same time.

During the measurement of the propagation path, the transmitter 203 independently uses three right rotating polarizations whose propagation directions are orthogonal to each other and three left rotating polarizations whose propagation directions are orthogonal to each other, respectively, and transmits an output of propagation path measurement signal generator 2, 6, 56, 102, 106, or 156. The receiver 303 can independently receive three right rotating polarizations orthogonal to each other and three left rotating polarizations orthogonal to each other, respectively. As a result, it is possible to know the radio channels for the three right rotating polarizations transmitted orthogonal to each other and the radio channels for the three left rotating polarizations transmitted orthogonal to each other. That is, it is possible to specify the unique influence of propagation path (change in amplitude and phase) that forms a radio channel for the transmission signal.

The transmitter 203 simultaneously transmits the outputs of the information signal generators 1, 5, 55, 101, 105, and 155 using three right rotating polarizations orthogonal to each other and three left rotating polarizations orthogonal to each other simultaneously. Each type of rotating polarizations independently received by the receiver 303 include signals from information signal generators 1, 5, 55, 101, 105, and 155, but the receiver 303 uses the radio channel previously known to divide the signal transmitted by the transmitter 203 into the incoming wave related to the three right rotating polarization orthogonal to each other and the three left rotating polarization orthogonal to each other and receive the signal.

Furthermore, since the receiver 303 can receive each of the right rotating polarization and the left rotating polarization independently, the receiver 303 can divide the right rotating polarization and the left rotating polarization into the incoming wave related to the propagation path by the odd number of reflections and the propagation path by the even number of reflections and receive the right rotating polarization and the left rotating polarization. Furthermore, the receiver 303 can direct a vector of a receiving antenna in a specific direction by three receiving antennas 61, 62, and 63 that are spatially orthogonal to each other. As a result, the vector of the receiving antenna can be matched with a propagation direction of an electromagnetic wave reaching the receiver 302 via a specific propagation path. Since the polarization of the electromagnetic wave is perpendicular to the propagation direction, the influence of the electromagnetic wave reaching the receiver via the specific propagation path can be reduced by matching the vector of the receiving antenna with the propagation direction of the electromagnetic wave.

According to the fourth embodiment, since the influence of the specific propagation path can be removed to obtain the outputs of the information signal generators 1, 5, 55, 101, 105, and 155 at the same time, the effect of improving the communication quality and increasing the transmission capacity is obtained.

### [Fifth Embodiment]

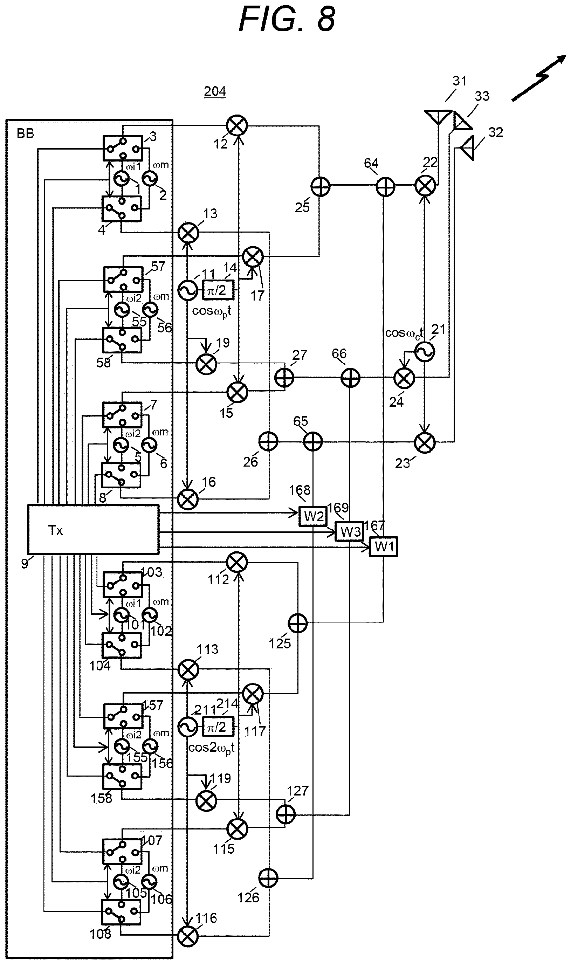

Fig. 8 is a diagram for describing an example of a configuration of a transmitter used for another radio system for reducing an influence of a specific propagation path using rotating polarization and improving communication quality. A transmitter 204 includes information signal generators 1, 5, 55, 101, 105, and 155 and propagation path measurement signal generators 2, 6, 56, 102, 106, and 156.

Similar to the transmitter 202 in Fig. 5, the transmitter 204 includes signal switchers 3, 4, 7, 8, 57, and 58, which are controlled by a transmission signal processing circuit 9, and switch between an information signal generator and a propagation path measurement signal generator. A configuration from the signal switchers 3, 4, 7, 8, 57, and 58 to a first synthesizer 25, a second synthesizer 26, and a third synthesizer 27 is the same as the transmitter 202 in Fig. 5.

Paired signal switchers 103 and 104 are controlled by a transmission signal processing circuit 9 to switch the information signal generator 101 and the propagation path measurement signal generator 102. Paired signal switchers 107 and 108 are controlled by a transmission signal processing circuit 9 to switch the information signal generator 105 and the propagation path measurement signal generator 106. Paired signal switchers 157 and 158 are controlled by the transmission signal processing circuit 9 to switch the information signal generator 155 and the propagation path measurement signal generator 156.

Outputs of signal switchers 103 and 104 are multiplied by an output of a second rotating polarization frequency generator 211 via a rotating polarization frequency 90° phase shift circuit 214 and an output of the second rotating polarization frequency generator 211, respectively, by a seventh transmission multiplication circuit 112 and an eighth transmission multiplication circuit 113, respectively, and become inputs of a fourth synthesizer 125 and a fifth synthesizer 126, respectively. Outputs of signal switchers 107 and 108 are multiplied by the output of the second rotating polarization frequency generator 211 via the rotating polarization frequency 90° phase shift circuit 214 and the output of the second rotating polarization frequency generator 211, respectively, by a ninth transmission multiplication circuit 115 and a tenth transmission multiplication circuit 116, respectively, and become inputs of a sixth synthesizer 127 and a fifth synthesizer 126, respectively. Outputs of signal switchers 157 and 158 are multiplied by the output of the second rotating polarization frequency generator 211 via the rotating polarization frequency 90° phase shift circuit 214 and the output of the second rotating polarization frequency generator 211, respectively, by an eleventh transmission multiplication circuit 117 and a twelfth transmission multiplication circuit 119, respectively, and become inputs of the fourth synthesizer 125 and the sixth synthesizer 127, respectively.

An output of the first synthesizer 25 and an output of the fourth synthesizer 125 via a first transmission weight circuit 167 become an input of a seventh synthesizer 64. An output of the second synthesizer 26 and an output of the fifth synthesizer 126 via a second transmission weight circuit 168 become an input of an eighth synthesizer 65. The output of the third synthesizer 27 and the output of the sixth synthesizer 127 via a third transmission weight circuit 169 become an input of a ninth synthesizer 66.

The outputs of the seventh synthesizer 64, the eighth synthesizer 65, and the ninth synthesizer 66 are up-converted using an output of a carrier frequency generation circuit 21 by a first transmitting mixer 22, a second transmitting mixer 23, and a third transmitting mixer 24, respectively. The up-converted output is radiated into a space by a first transmitting antenna 31, a second transmitting antenna 32, and a third transmitting antenna 33 which are spatially orthogonal to each other. Frequencies of the first rotating polarization frequency generator 11 and the second rotating polarization frequency generator 211 have a relationship of an integer multiple.

The difference between the transmitter 204 of the fifth embodiment and the transmitter 202 of the embodiment of Fig. 5 is that the transmitter of the fifth embodiment can simultaneously transmit and receive rotating polarization having different polarization rotation frequencies that are orthogonal to each other in frequency. According to the fifth embodiment, information signals can be transmitted independently at the first and second rotating polarization frequencies, so that there is an effect of increasing the transmission capacity compared to the embodiment of Fig. 5.

### [Sixth Embodiment]

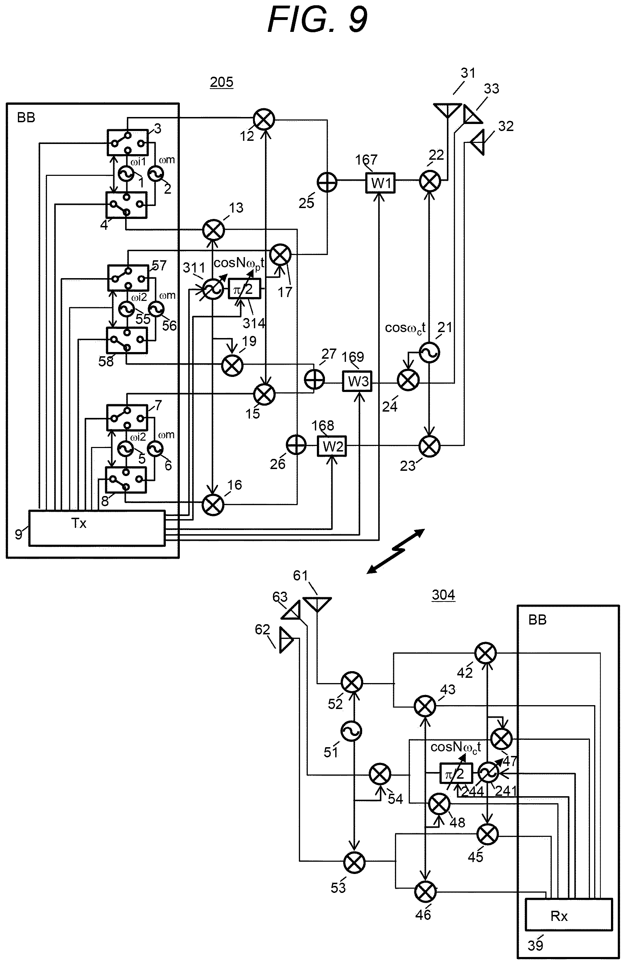

Fig. 9 is a diagram of an example of a configuration of another radio system for reducing an influence of a specific propagation path using rotating polarization and improving communication quality. A difference from the embodiment of Fig. 5 is that rotating polarization frequency generators 11 and 41 included in a transmitter and a receiver are replaced by variable rotating polarization frequency generators 311 and 241. Further, rotating polarization frequency 90° phase shift circuits 14 and 44 are replaced by variable rotating polarization frequency 90° phase shift circuits 314 and 244. In addition, a first transmission weight circuit 167, a second transmission weight circuit 168, and a third transmission weight circuit 169 are inserted between a first synthesizer 25 and a first transmitting mixer 22 of the transmitter, between a second synthesizer 26 and a second transmitting mixer 23 of the transmitter, and between a third synthesizer 27 and a third transmitting mixer 24 of the transmitter.

The variable rotating polarization frequency generators 311 and 241, the first transmission weight circuit 167, the second transmission weight circuit 168, and the third transmission weight circuit 169 are controlled by a transmission signal processing circuit 9 or a reception signal processing circuit 39.

Generally, the radio wave environment changes depending on an installation state of the devices surrounding the radio device. For example, when a distance between obstacles that scatter electromagnetic waves becomes narrower than a half wavelength of the electromagnetic waves used for communication, the electromagnetic waves hardly pass through this distance. In addition, when a **scatter** of the electromagnetic waves is present in front of and near the transmitter, the electromagnetic waves propagating in the front direction rebound to the transmitter itself, and thus hardly reach the receiver.

According to the sixth embodiment, as compared with the embodiment of Fig. 5, the frequency of the rotating polarization can be variable, and the transmitter can control the radiation direction of the rotating polarization. Therefore, in response to the change in the radio wave environment formed by the devices surrounding the transmitter and the receiver, the radiation direction of the rotating polarization frequency and the transmission rotating polarization can be changed to improve the communication quality, so there is an effect of maintaining the good communication quality following the change in the radio wave environment surrounding the radio device.

### [Seventh Embodiment]

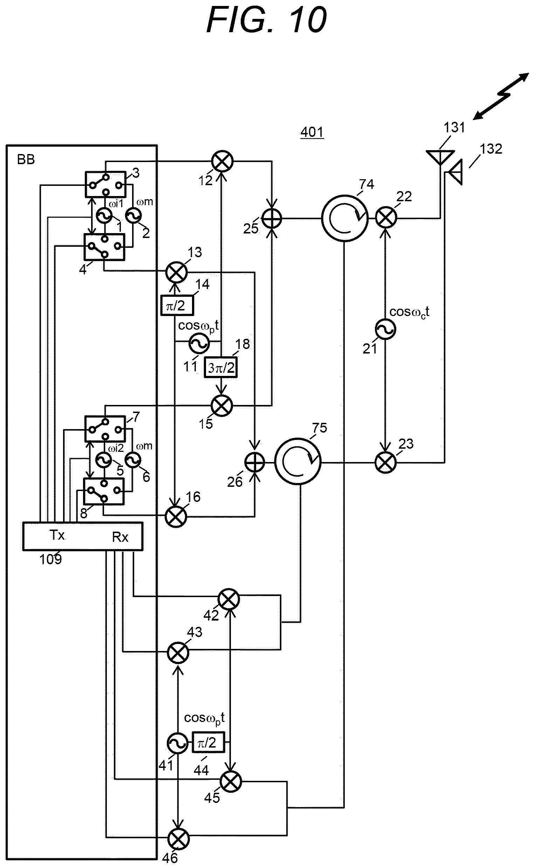

Fig. 10 is a diagram for describing an example of a configuration of radio device used for a radio system for reducing an influence of a specific propagation path using rotating polarization and improving communication quality. In the seventh embodiment, a configuration having functions of a transmitter 201 and a receiver 301 illustrated in Fig. 1 will be described, and the description of the same configuration as that in Fig. 1 will be omitted as appropriate.

Similar to the transmitter 201 in Fig. 1, a rotating polarization radio device 401 includes information signal generators 1 and 5, propagation path measurement signal generators 2 and 6, and signal switchers 3, 4, 7, and 8, which are controlled by a signal processing circuit 109. Configurations of transmission multiplication circuits 12, 13, 15, and 16, a rotating polarization frequency generator 11, a rotating polarization frequency 90° phase shift circuit 14, a first synthesizer 25, and a second synthesizer 26 are the same as those in Fig. 1

Outputs of the first synthesizer 25 and the second synthesizer 26 are coupled to first terminals of a first circulator 74 and a second circulator 75, respectively. A first transmitting mixer 22 and a second transmitting mixer 23, respectively, are inserted between second terminals of the first circulator 74 and the second circulator 75 and a first shared transmission and reception antenna 131 and a second shared transmission and reception antenna 132. An output of a carrier frequency generation circuit 21 is coupled to local inputs of the first transmitting mixer 22 and the second transmitting mixer 23.

Third terminals of the first circulator 74 and the second circulator 75, respectively, are connected to a signal processing circuit 109 via a bifurcated line. The configuration from the third terminals of the circulators 74 and 75 to the signal processing circuit 109 is the same as that of Fig. 1.

According to the seventh embodiment, the antennas 131 and 132 can be used for both transmission and reception by a switching action of the circulators 74 and 75. Therefore, there is an effect that the radio device having the functions of the transmitter 201 and the receiver 301 in Fig. 1 can be realized, and the transmission and reception are executed simultaneously.

### [Eighth Embodiment]

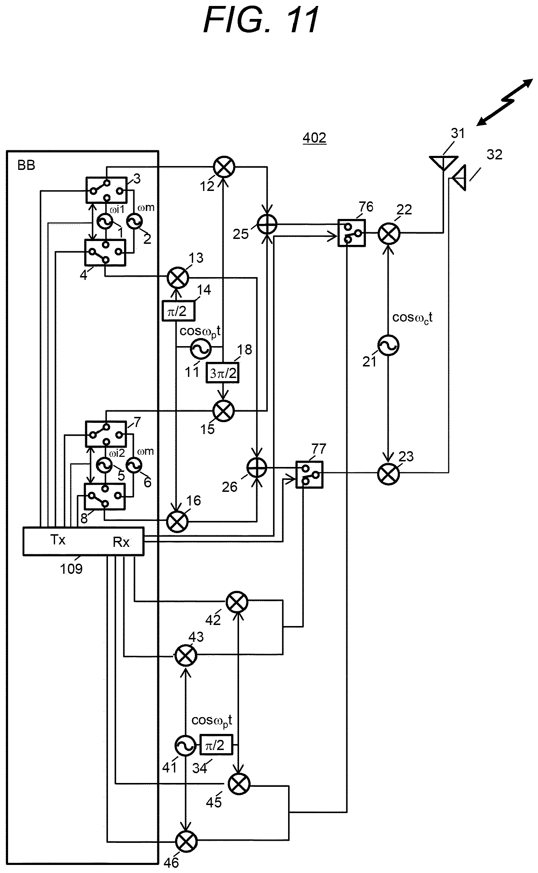

Fig. 11 is a diagram for describing an example of a configuration of radio device used for a radio system for reducing an influence of a specific propagation path using rotating polarization and improving communication quality. The difference between the eighth embodiment and the embodiment of Fig. 10 is that radio frequency switches 76 and 77 are mounted instead of the circulators 74 and 75.

According to the eighth embodiment, the radio device having the functions of the transmitter 201 and the receiver 301 in Fig. 1 can be realized as in the embodiment of Fig. 10. In the eighth embodiment, the transmission and reception cannot be performed at the same time, but instead of a circulator using a large-sized magnetic circuit, a small, inexpensive and lightweight radio frequency switch that can be realized with a semiconductor can be used, and as a result there is an effect of reducing size, weight, and manufacturing costs of the radio device.

### [Ninth Embodiment]

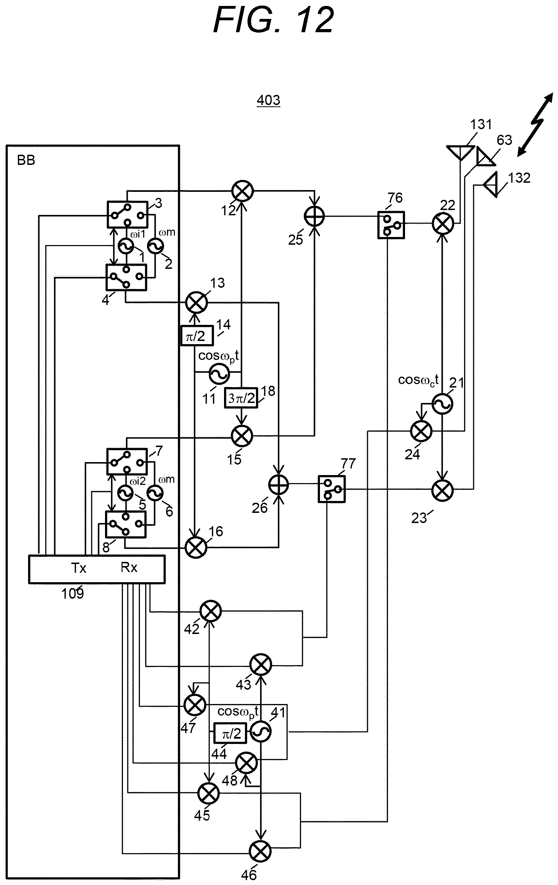

Fig. 12 is a diagram for describing an example of a configuration of radio device used for a radio system for reducing an influence of a specific propagation path using rotating polarization and improving communication quality. In the ninth embodiment, a configuration having functions of a transmitter 201 and a receiver 302 illustrated in Fig. 4 will be described, and the description of the same configuration as that in Fig. 4 will be omitted as appropriate.

A rotating polarization radio device 403 includes information signal generators 1 and 5, propagation path measurement signal generators 2 and 6, and signal switchers 3, 4, 7, and 8 as in the transmitter 201 illustrated in Fig. 4. These components are controlled by a signal processing circuit 109. Outputs of the signal switchers 3, 4, 7, and 8 are processed by the same configuration as the transmitter 201 illustrated in Fig. 4 and become first inputs of a first synthesizer 25 and a second synthesizer 26.

Outputs of the first synthesizer 25 and the second synthesizer 26 are coupled to first distribution terminals of a first radio frequency switch 76 and a second radio frequency switch 77, respectively. A first transmitting mixer 22 and a second transmitting mixer 23, respectively, are inserted between a common terminal of the first radio frequency switch 76 and the second radio frequency switch 77 and a first shared transmission and reception antenna 131 and a second shared transmission and reception antenna 132. An output of a carrier frequency generation circuit 21 is coupled to local inputs of the first transmitting mixer 22 and the second transmitting mixer 23.

Each second distribution terminal of the first radio frequency switch 76 and the second radio frequency switch 77 is input to the signal processing circuit 109 via a bifurcated line. The configuration from each bifurcated line to the signal processing circuit 109 is the same as the configuration from the receiving mixers 52 and 53 of the receiver 302 to the reception signal processing circuit 39 in Fig. 4.

An output of the receiving antenna 63 is down-converted using the output of the carrier frequency generation circuit 21 by the third transmitting mixer 24 that is also used for reception, and the output of the third transmitting mixer 24 is bifurcated and is multiplied by an output of a rotating polarization frequency generator 41 via a rotating polarization frequency 90° phase shift circuit 44 and an output of the rotating polarization frequency generator 41 by a fifth reception multiplication circuit 47 and a sixth reception multiplication circuit 48, and is input to the signal processing circuit 109.

According to the ninth embodiment, there is an effect of making the radio device having the functions of the transmitter 201 and the receiver 302 in Fig. 4 small, inexpensive, and lightweight.

### [Tenth Embodiment]

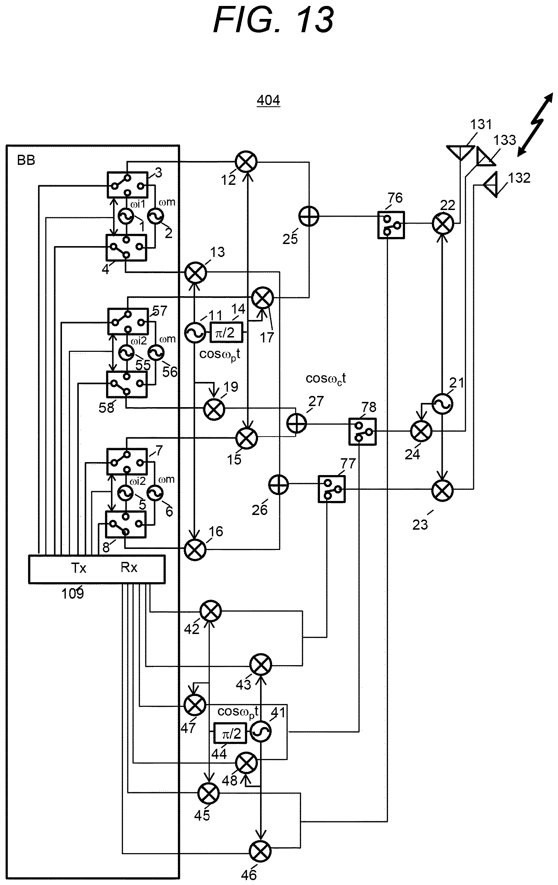

Fig. 13 is a diagram for describing an example of a configuration of radio device used for another radio system for reducing an influence of a specific propagation path using rotating polarization and improving communication quality. In the tenth embodiment, a configuration having functions of a transmitter 202 and a receiver 302 illustrated in Fig. 5 will be described, and the description of the same configuration as that in Fig. 5 will be omitted as appropriate.

A rotating polarization radio device 404 includes information signal generators 1, 5, and 55, propagation path measurement signal generators 2, 6, and 56, and signal switchers 3, 4, 7, 8, 57, and 58 as in the transmitter 202 illustrated in Fig. 5. Similarly, these components are controlled by a signal processing circuit 109. Outputs of the signal switchers 3, 4, 7, 8, 57, and 58 are processed by the same configuration as the transmitter 202 illustrated in Fig. 5 and become first inputs of a first synthesizer 25, a second synthesizer 26, and a third synthesizer 27.

Outputs of the first synthesizer 25, the second synthesizer 26, and the third synthesizer 27 are coupled to first distribution terminals of a first radio frequency switch 76, a second radio frequency switch 77, and a third radio frequency switch 78, respectively. A first transmitting mixer 22, a second transmitting mixer 23 and a third transmitting mixer 24 are inserted between a common terminal of the first radio frequency switch 76, the second radio frequency switch 77, and the third radio frequency switch 78 and a first shared transmission and reception antenna 131, a second shared transmission and reception antenna 132, and a third shared transmission and reception antenna 133, respectively. An output of a carrier frequency generation circuit 21 is coupled to local inputs of the first transmitting mixer 22, the second transmitting mixer 23, and the third transmitting mixer 24.

Each second distribution terminal of the first radio frequency switch 76, the second radio frequency switch 77, and the third radio frequency switch 78 is input to the signal processing circuit 109 via each bifurcated line. The above configuration from the bifurcated line is the same as the configuration of the receiver 302 illustrated in Fig. 5.

According to the tenth embodiment, there is an effect of making the radio device having the functions of the transmitter 202 and the receiver 302 in Fig. 5 small, inexpensive, and lightweight.

### [Eleventh Embodiment]

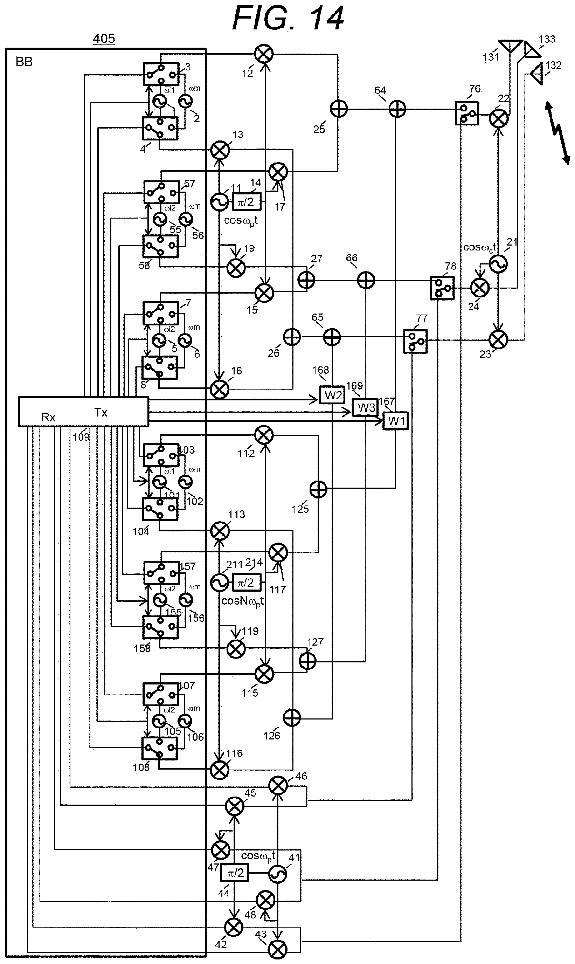

Fig. 14 is a diagram for describing an example of a configuration of radio device used for another radio system for reducing an influence of a specific propagation path using rotating polarization and improving communication quality. The eleventh embodiment has the functions of the transmitter 204 in Fig. 8 and the receiver 302 in Fig. 5. The description of the same configuration as in Figs. 5 and 8 will be omitted as appropriate.

Similar to the transmitter 204 illustrated in Fig. 8, a rotating polarization radio device 405 includes information signal generators 1, 5, 55, 101, 105, and 155 and propagation path measurement signal generators 2, 6, 56, 102, 106, and 156. Further, similar to the transmitter 204 illustrated in Fig. 8, the rotating polarization radio device 405 includes signal switchers 3, 4, 7, 8, 57, 58, 103, 104, 107, 108, 157, and 158. In addition, the rotating polarization radio device 405 includes a first transmission weight circuit 167, a second transmission weight circuit 168, and a third transmission weight circuit 169. Similar to Fig. 5, these components are controlled by a signal processing circuit 109. In addition, the rotating polarization radio device 405 includes first to ninth synthesizers 25, 26, 27, 125, 126, 127, 64, 65, and 66. Here, the configuration from the seventh to the ninth synthesizer is the same as that in Fig. 8, and therefore the description thereof will be omitted.

Outputs of a seventh synthesizer 64, an eighth synthesizer 65, and a ninth synthesizer 66 are coupled to first distribution terminals of a first radio frequency switch 76, a second radio frequency switch 77, and a third radio frequency switch 78, respectively.

A first transmitting mixer 22, a second transmitting mixer 23 and a third transmitting mixer 24 are inserted between a common terminal of the first radio frequency switch 76, the second radio frequency switch 77, and the third radio frequency switch 78 and a first shared transmission and reception antenna 131, a second shared transmission and reception antenna 132, and a third shared transmission and reception antenna 133, respectively.

An output of a carrier frequency generation circuit 21 is coupled to local inputs of the first transmitting mixer 22, the second transmitting mixer 23, and the third transmitting mixer 24. An output of the second distribution terminal of the first radio frequency switch 76 is multiplied by an output of a rotating polarization frequency generator 41 via a rotating polarization frequency 90° phase shift circuit 44 and an output of the rotating polarization frequency generator 41, respectively, by a first reception multiplication circuit 42 and a second reception multiplication circuit 43 via a bifurcated line, and is input to a signal processing circuit 109. An output of the second distribution terminal of the second radio frequency switch 77 is multiplied by the output of the rotating polarization frequency generator 41 via the rotating polarization frequency 90° phase shift circuit 44 and the output of the rotating polarization frequency generator 41, respectively, by a third reception multiplication circuit 45 and a fourth reception multiplication circuit 46 via the bifurcated line, and is input to a signal processing circuit 109. An output of the second distribution terminal of the third radio frequency switch 78 is multiplied by the output of the rotating polarization frequency generator 41 via the rotating polarization frequency 90° phase shift circuit 44 and the output of the rotating polarization frequency generator 41, respectively, by a fifth reception multiplication circuit 47 and a sixth reception multiplication circuit 48 via the bifurcated line, and is input to a signal processing circuit 109.

According to the eleventh embodiment, there is an effect of making the radio device having the functions of the transmitter 204 in Fig. 8 and the receiver 302 in Fig. 5 small, inexpensive, and lightweight.

### [Twelfth Embodiment]

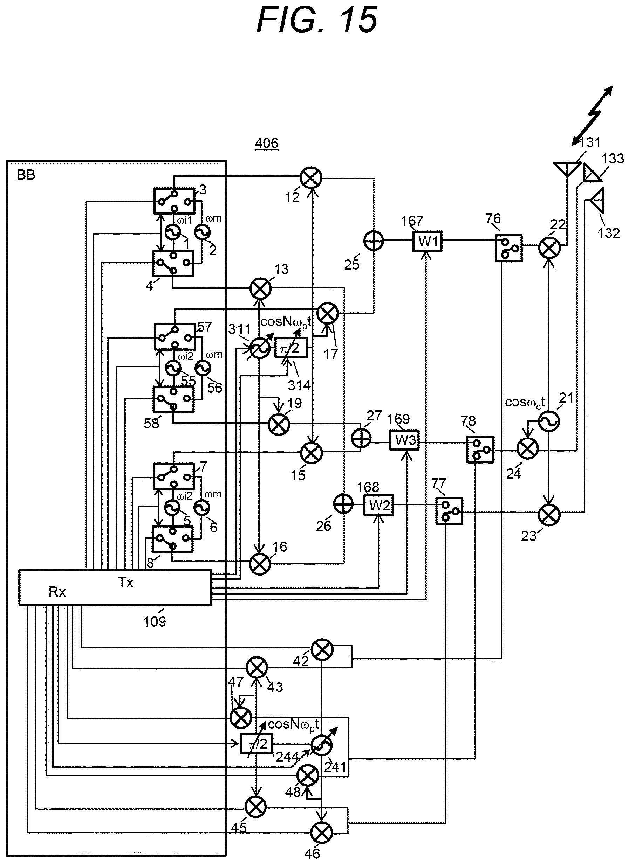

Fig. 15 is a diagram for describing an example of another configuration of radio device for reducing an influence of a specific propagation path using rotating polarization and improving communication quality. In this example, functions similar to the transmitter 205 and receiver 304 in Fig. 9 are realized, and the antenna can be used for transmission and reception.

A rotating polarization radio device 406 includes information signal generators 1, 5, 55, 101, 105, and 155 and propagation path measurement signal generators 2, 6, 56, 102, 106, and 156. Since the configuration from each signal generator to a first transmission weight circuit 167, a second transmission weight circuit 168, and a third transmission weight circuit 169 is the same as that of the transmitter 205 in Fig. 9.

Outputs of the first transmission weight circuit 167, the second transmission weight circuit 168, and the third transmission weight circuit 169 are coupled to first distribution terminals of a first radio frequency switch 76, a second radio frequency switch 77, and a third radio frequency switch 78, respectively. A first transmitting mixer 22, a second transmitting mixer 23 and a third transmitting mixer 24 are inserted between a common terminal of the first radio frequency switch 76, the second radio frequency switch 77, and the third radio frequency switch 78 and a first shared transmission and reception antenna 131, a second shared transmission and reception antenna 132, and a third shared transmission and reception antenna 133, respectively. An output of a carrier frequency generation circuit 21 is coupled to local inputs of the first transmitting mixer 22, the second transmitting mixer 23, and the third transmitting mixer 24.

An output of a second distribution terminal of the first radio frequency switch 76 is multiplied by the output of a variable rotating polarization frequency generator 241, the output of the variable rotating polarization frequency generator 241, and an output of the variable rotating polarization frequency generator 241 via a variable rotating polarization frequency 90° phase shift circuit 244, respectively, by a first reception multiplication circuit 42, and a second reception multiplication circuit 43 via a bifurcated line, and is input to a signal processing circuit 109.

An output of a second distribution terminal of the second radio frequency switch 77 is multiplied by the output of the variable rotating polarization frequency generator 241, the output of the variable rotating polarization frequency generator 241 via the variable rotating polarization frequency 90° phase shift circuit 244, and the output of the variable rotating polarization frequency generator 241, respectively, by a third reception multiplication circuit 45, and a fourth reception multiplication circuit 46 via the bifurcated line, and is input to a signal processing circuit 109.

An output of the second distribution terminal of the third radio frequency switch 78 is multiplied by the output of the variable rotating polarization frequency generator 241, the output of the variable rotating polarization frequency generator 241 via the variable rotating polarization frequency 90° phase shift circuit 244, and the output of the rotating polarization frequency generator 241, respectively, by a fifth reception multiplication circuit 47, and a sixth reception multiplication circuit 49 via the bifurcated line, and is input to the signal processing circuit 109.

According to the twelfth embodiment, there is an effect of making the radio device having the functions of the transmitter 205 and the receiver 304 in Fig. 9 small, inexpensive, and lightweight by switching with the radio frequency switch.

### [Thirteenth Embodiment]

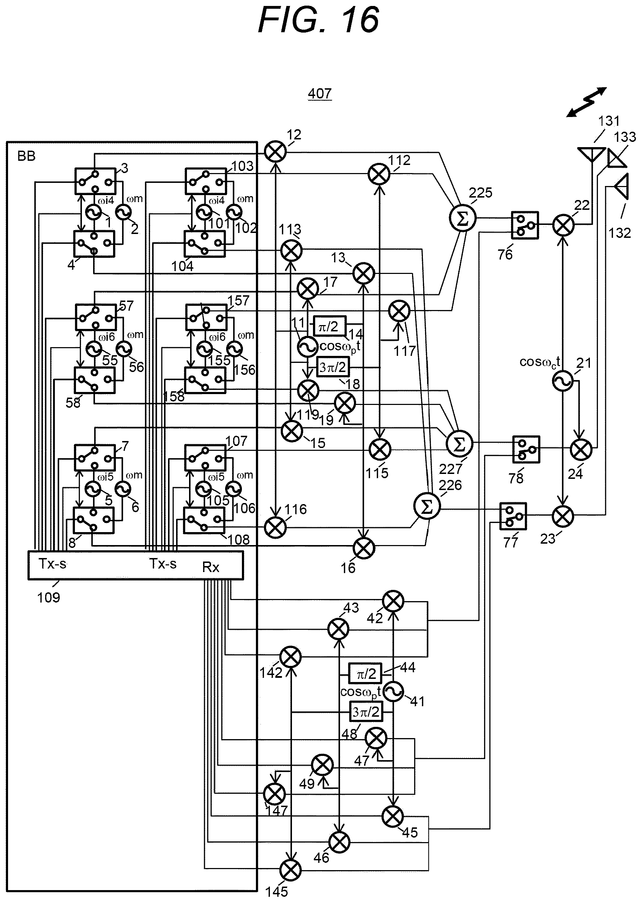

Fig. 16 is a diagram for describing an example of another configuration of radio device for reducing an influence of a specific propagation path using rotating polarization and improving communication quality. In this example, functions similar to the transmitter 203 and receiver 303 in Fig. 7 are realized, and the antenna can be used for transmission and reception.

A rotating polarization radio device 407 includes information signal generators 1, 5, 55, 101, 105, and 155 and propagation path measurement signal generators 2, 6, 56, 102, 106, and 156. Since the configuration from each signal generator to a first four synthesizer 225, a second four synthesizer 226, and a third four synthesizers 227 is the same as that of the transmitter 203 in Fig. 7.

Outputs of the first four synthesizer 225, the second four synthesizer 226, and the third four synthesizer 227 are coupled to first distribution terminals of a first radio frequency switch 76, a second radio frequency switch 77, and a third radio frequency switch 78, respectively. A first transmitting mixer 22, a second transmitting mixer 23 and a third transmitting mixer 24 are inserted between a common terminal of the first radio frequency switch 76, the second radio frequency switch 77, and the third radio frequency switch 78 and a first shared transmission and reception antenna 131, a second shared transmission and reception antenna 132, and a third shared transmission and reception antenna 133, respectively. An output of a carrier frequency generation circuit 21 is coupled to local inputs of the first transmitting mixer 22, the second transmitting mixer 23, and the third transmitting mixer 24.

An output of a second distribution terminal of the first radio frequency switch 76 is multiplied by an output of a rotating polarization frequency generator 41, an output of the rotating polarization frequency generator 41 via a rotating polarization frequency 90° phase shift circuit 44, and an output of the rotating polarization frequency generator 41 via a rotating polarization frequency 270° phase shift circuit 48, respectively, by a first reception multiplication circuit 42, a second reception multiplication circuit 43, and a seventh reception multiplication circuit 142 via a trifurcated line, and is input to a signal processing circuit 109.

An output of a second distribution terminal of the second radio frequency switch 77 is multiplied by the output of the rotating polarization frequency generator 41, the output of the rotating polarization frequency generator 41 via the rotating polarization frequency 90° phase shift circuit 44, and the output of the rotating polarization frequency generator 41 via the rotating polarization frequency 270° phase shift circuit 48, respectively, by a third reception multiplication circuit 45, a fourth reception multiplication circuit 46, and an eighth reception multiplication circuit 145 via the trifurcated line, and is input to a signal processing circuit 109.

An output of the second distribution terminal of the third radio frequency switch 78 is multiplied by the output of the rotating polarization frequency generator 41, the output of the rotating polarization frequency generator 41 via the rotating polarization frequency 90° phase shift circuit 44, and the output of the rotating polarization frequency generator 41 via the rotating polarization frequency 270° phase shift circuit 48, respectively, by a fifth reception multiplication circuit 47, a sixth reception multiplication circuit 49, and a ninth reception multiplication circuit 147 via the trifurcated line, and is input to the signal processing circuit 109.

According to the thirteenth embodiment, there is an effect of making the radio device having the functions of the transmitter 203 and the receiver 303 in Fig. 7 small, inexpensive, and lightweight by switching with the radio frequency switch.

### [Fourteenth Embodiment]

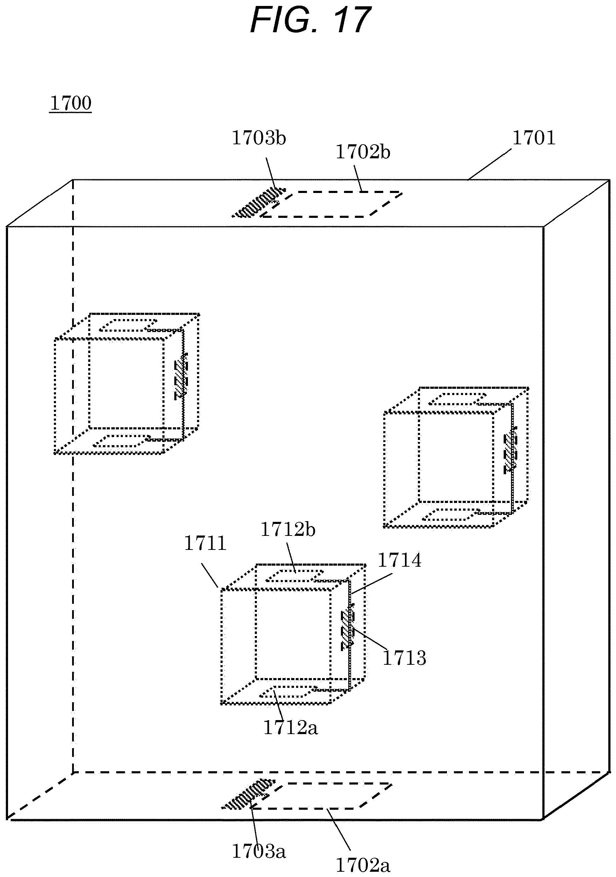

Fig. 17 is a diagram for describing an example of a configuration of a lift monitoring and controlling system to which the radio system for reducing an influence of a specific propagation path using rotating polarization and improving communication quality is applied.

A lift monitoring and controlling system 1700 according to a fourteenth embodiment moves a plurality of lifting cages 1711 up and down in a building 1701 where a lift is installed. A base station rotating polarization radio device 1703 having a rotating polarization function and a base station dual quadrature polarization integrated antenna 1702 having a rotating polarization function based on the embodiment described above are combined and installed on a floor portion and a ceiling portion in the building 1701. A terminal station dual quadrature polarization integrated antenna 1712 is installed on an external ceiling and an external floor surface of a lifting cage 1711, and is coupled to a radio terminal 1713 using a radio frequency cable 1714.

Since the base station rotating polarization radio device 1703 and the radio terminal 1713 use the inside of the building 1701 as a radio transmission medium, the electromagnetic waves are subjected to multiple reflections by an inner wall of the building 1701 and an outer wall of the lift, and are not the same as polarization when the electromagnetic waves transmitted by the plurality of radio terminals 1713 reach the base station rotating polarization radio device 1703. In addition, since the lifting cage 1711 changes its relative position, the polarization of the electromagnetic wave reaching the base station rotating polarization radio device 1703 from the plurality of radio terminals 1713 generally changes each time the base station rotating polarization radio device 1703 and the radio terminal 1713 perform radio communication when the elevator stops.

According to the fourteenth embodiment, by performing processing of a radio channel measurement mode and a data transmission mode within the time when the base station rotating polarization radio device 1703 and the radio terminal 1713 fix the relative positions, it is possible to perform highly reliable radio communication between the lift and the fixed rotating polarization radio device in the lift system which is hard to predict the relatively fixed position. Therefore, since it is possible to remotely control and monitor the lifting cage 1711 from the building 1701 without using wired connection means, the wired connection means such as cables can be removed, the same transportation capacity can be realized with a smaller building volume, or the transportation capacity can be improved by increasing a dimension of a lift in the same building volume.

### [Fifteenth Embodiment]

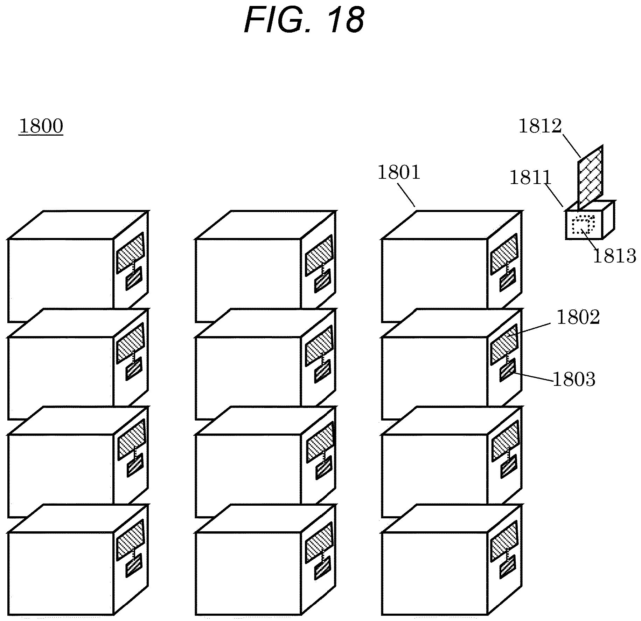

Fig. 18 is a diagram illustrating an example of a configuration of a transforming device monitoring and controlling system to which the radio system for reducing an influence of a specific propagation path using rotating polarization and improving communication quality is applied.

The transforming device monitoring and controlling system 1800 of the fifteenth embodiment includes a plurality of transforming devices 1801. A radio terminal 1803 and a radio terminal dual quadrature polarization integrated antenna 1802 are coupled and installed in the transforming device 1801. A radio base station 1811 is set up near the plurality of transforming devices 1801. A rotating polarization radio device 1813 and a rotating polarization radio device dual quadrature polarization integrated antenna 1812 that transmits and receives rotating polarization based on the embodiment described above are coupled and installed in the radio base station 1811.

The dimensions of the transforming device 1801 are on the order of several meters, and is overwhelmingly larger than wavelengths corresponding to several hundred MHz to several GHz which are frequencies of electromagnetic waves used by the radio device. For this reason, the electromagnetic waves are subjected to multiple reflections by the plurality of transforming devices 1801, and a multiple wave interference environment is formed. Therefore, a transmission wave from the radio terminal 1803 fixedly installed in each transforming device 1801 reaches the rotating polarization radio device 1813 installed in the radio base station 1811 with different polarizations.

According to the fifteenth embodiment, highly reliable radio communication can be performed between rotating polarization radio device 1813 and a plurality of radio terminals 1803. For this reason, it becomes possible to remotely control and monitor the transforming device 1801 by a plurality of radio base stations 1811 using the wireless connection means using the radio device without using the wired connection means. Since it can solve the problem of high-voltage induced power and can eliminate the installation cost of the cables which are a problem when using the wired connection means such as cables, there is an effect of improving safety and reducing costs of the control and monitoring system of the transforming device 1801.

Features described in this specification and the claims or shown in a figure shall be deemed combinable with and amongst each other also if their combination is not expressly described, to the extent that the combination is technically feasible and within the scope of the invention as defined by the appended claims.

Embodiments and figures shall not be understood as being meant necessarily exclusive against each other. Descriptions of a method or procedure or a method step or a procedural step shall be understood also as description of means and/or possibly program instructions of executable code on a data carrier adapted for implementing the method or procedure or method step or procedural step, and vice versa.

## Claims

1. A radio communication system comprising: a transmitter (201 - 205); and a receiver (301 - 304), wherein
the transmitter (201 - 205) is configured to transmit M types of independent rotating polarizations at the same time,
the receiver (301 - 304) is configured to receive N types of independent rotating polarizations at the same time, and
M ≤ N, where
M is a natural number and N is a natural number of 2 or more,
and M data are transmitted
and received,
wherein
the transmitter (201 - 205) is configured to transmit, during measurement of a propagation path, known information by transmitting the M types of independent rotating polarizations, and
the receiver (301 - 304) is configured to receive, during the measurement of the propagation path, the N types of independent
rotating polarizations for each of the M types of
independent rotating polarizations at the same time and to evaluate communication quality, and
the receiver (301 - 304) is configured to exclude,
during information communication, when receiving data transmitted with one of the M types of independent rotating polarizations, an influence of a specific rotating polarization among the N types of independent rotating polarizations based on the evaluation of communication quality to restore the data,
wherein
the receiver (301 - 304) is configured to store,
during the measurement of the propagation path, a received signal of the known information received for each polarization, and
the receiver (301 - 304) is configured to simultaneously receive, during the information communication, the M types of independent rotating polarizations transmitted by the transmitter as the N types of independent rotating polarizations, and to restore the M
data based on the received signal of the known information.

2. The radio communication system according to claim 1, wherein
the M types of independent rotating polarizations are at least one type of right rotating polarization or left rotating polarization, and
the N types of independent rotating polarizations are at least two types of right rotating polarization and left rotating polarization.

3. The radio communication system according to claim 1, wherein
the M types of independent rotating polarizations are at least two types of rotating polarizations whose transmission directions are orthogonal to each other.

4. The radio communication system according to claim 3, wherein
the M types of independent rotating polarizations include two types of rotating polarizations having different rotation directions.

5. The radio communication system according to claim 1, wherein
the N types of independent rotating polarizations are at least two types of rotating polarizations whose transmission directions are orthogonal to each other.

6. The radio communication system according to claim 5, wherein
the N types of independent rotating polarizations include two types of rotating polarizations having different rotation directions.

7. The radio communication system according to claim 1, wherein
the M types of independent rotating polarizations include at least six types of three types of right rotating polarizations whose transmission directions are orthogonal to each other and three types of left rotating polarizations whose transmission directions are orthogonal to each other, and
the N types of independent rotating polarizations include at least six types of three types of right rotating polarizations whose transmission directions are orthogonal to each other and three types of left rotating polarizations whose transmission directions are orthogonal to each other.

8. The radio communication system according to claim 1, wherein the transmitter is configured to transmit, during the measurement of the propagation path, the M types of independent rotating polarizations by separating each rotating polarization in time or by transmitting the known information orthogonally coded with each other.

9. The radio communication system according to claim
1, wherein the communication system is configured to delete an incoming wave having a specific rotating polarization by causing the receiver to match a direction of a received electric field with a direction for the specific propagation path.

10. A radio communication method comprising:
transmitting and receiving rotating polarization by a transmitter (201 - 205) and a receiver (301 - 304), wherein the transmitter (201 - 205) transmits M types of
independent rotating polarizations at the same time, the receiver (301 - 304) receives N types of
independent rotating polarizations at the same time, and M ≤ N, where
M is a natural number and N is a natural number of 2 or more, and M data are transmitted and received,
wherein
during measurement of a propagation path, the transmitter (201 - 205) transmits known information by transmitting the M types of independent rotating polarizations, and
the receiver (301 - 304) receives the N types of
independent rotating polarizations for each of the M types of independent rotating polarizations at the same time and evaluates communication quality, and
during information communication, when receiving data transmitted with one of the M types of independent rotating polarizations, the receiver (301 - 304) excludes an influence of a specific rotating polarization among the N types of independent rotating polarizations based on the evaluation of communication quality to restore the data,
wherein, during the measurement of the propagation path, the receiver (301 - 304) stores a received signal of the known information received for each polarization, and
during the information communication, the receiver (301 - 304) simultaneously receives the M types of independent rotating polarizations transmitted by the transmitter as the N types of independent rotating polarizations, and restores the M data based on the received signal of the known information.

11. The radio communication method according to claim 10, wherein during the measurement of the propagation path, the transmitter (201 - 205) transmits the known signal with a first rotating polarization at a first timing, and the receiver (301 - 304) independently receives the transmitted first rotating polarization as the N types of independent rotating polarizations, detects the known signal from each of the rotating polarizations, and selects a second rotating polarization from the N types of independent rotating polarizations based on a detection result, and during information communication, the transmitter (201 - 205) transmits first communication data with the first rotating polarization, and the receiver (301 - 304) receives the transmitted first rotating polarization as the second rotating polarization and restores the first communication data based on a signal obtained from the second rotating polarization, and
during the measurement of the propagation path, the transmitter (201 - 205) transmits a known signal with a third rotating polarization at a second timing different from the first timing, and
the receiver (301 - 304) independently receives the transmitted third rotating polarization as the N types of independent rotating polarizations, detects the known signal from each of the rotating polarizations, and selects a fourth rotating polarization from the N types of independent rotating polarizations based on the detection result, and
during the information communication, the transmitter (201 - 205) transmits a second communication data with the third rotating polarization simultaneously with transmitting the first communication data with the first rotating polarization, and
the receiver (301 - 304) independently receives the transmitted first rotating polarization and the third rotating polarization as the N types of independent rotating polarizations,
separates and restores the first communication data and the second communication data using the detection result of the known signal based on a signal obtained from the second rotating polarization, and
separates and restores the first communication data and the second communication data using the detection result of the known signal based on a signal obtained from the fourth rotating polarization.

12. The radio communication method according to claim 11, wherein
the detection result of the known signal includes information on amplitude and phase.

13. The radio communication method according to claim 11, wherein
the first rotating polarization and the third rotating polarization are different in at least one of a rotation direction and a transmission direction of the polarization, and
the second rotating polarization and the fourth rotating polarization are different in at least one of the rotation direction and a reception direction of the polarization.

## Patentansprüche

1. Funkkommunikationssystem mit: einem Sender (201 - 205); und einem Empfänger (301 - 304), wobei
der Sender (201 - 205) so konfiguriert ist, dass er M Arten von unabhängigen rotierenden Polarisationen gleichzeitig sendet,
der Empfänger (301 - 304) so konfiguriert ist, dass er N Arten von unabhängigen rotierenden Polarisationen gleichzeitig empfängt, und
M ≤ N, wobei M eine natürliche Zahl ist und N eine natürliche Zahl von 2 oder mehr ist, und M Daten gesendet und empfangen werden,
wobei
der Sender (201 - 205) so konfiguriert ist, dass er während einer Messung eines Ausbreitungsweges eine bekannte Information durch Senden der M Arten von unabhängigen rotierenden Polarisationen sendet, und
der Empfänger (301 - 304) so konfiguriert ist, dass er während der Messung des Ausbreitungsweges die N Arten von unabhängigen rotierenden Polarisationen für jede der M Arten von unabhängigen rotierenden Polarisationen gleichzeitig empfängt und eine Kommunikationsqualität bewertet, und
der Empfänger (301 - 304) so konfiguriert ist, dass er während einer Informationskommunikation, wenn er ein Datum empfängt, das mit einer der M Arten von unabhängigen rotierenden Polarisationen gesendet wird, einen Einfluss einer spezifischen rotierenden Polarisation unter den N Arten von unabhängigen rotierenden Polarisationen auf der Grundlage der Bewertung der Kommunikationsqualität ausschließt, um das Datum wiederherzustellen,
wobei
der Empfänger (301 - 304) so konfiguriert ist, dass er während der Messung des Ausbreitungsweges ein empfangenes Signal der bekannten Information speichert, die für jede Polarisation empfangen wurde, und
der Empfänger (301 - 304) so konfiguriert ist, dass er während der Informationskommunikation gleichzeitig die M Arten von unabhängigen rotierenden Polarisationen, die von dem Sender gesendet werden, als die N Arten von unabhängigen rotierenden Polarisationen empfängt und die M Daten auf der Grundlage des empfangenen Signals der bekannten Information wiederherstellt.

2. Funkkommunikationssystem nach Anspruch 1, wobei
die M Arten von unabhängigen rotierenden Polarisationen mindestens eine Art von rechts rotierender Polarisation oder links rotierender Polarisation sind, und
die N Arten von unabhängigen rotierenden Polarisationen mindestens zwei Arten von rechts rotierender Polarisation und links rotierender Polarisation sind.

3. Funkkommunikationssystem nach Anspruch 1, wobei
die M Arten von unabhängigen rotierenden Polarisationen mindestens zwei Arten von rotierenden Polarisationen sind, deren Senderichtungen orthogonal zueinander sind.

4. Funkkommunikationssystem nach Anspruch 3, wobei
die M Arten von unabhängigen rotierenden Polarisationen zwei Arten von rotierenden Polarisationen mit unterschiedlichen Rotationsrichtungen umfassen.

5. Funkkommunikationssystem nach Anspruch 1, wobei
die N Arten von unabhängigen rotierenden Polarisationen mindestens zwei Arten von rotierenden Polarisationen sind, deren Senderichtungen orthogonal zueinander sind.

6. Funkkommunikationssystem nach Anspruch 5, wobei
die N Arten von unabhängigen rotierenden Polarisationen zwei Arten von rotierenden Polarisationen mit unterschiedlichen Rotationsrichtungen umfassen.

7. Funkkommunikationssystem nach Anspruch 1, wobei
die M Arten von unabhängigen rotierenden Polarisationen mindestens sechs Arten aus drei Arten von rechts rotierenden Polarisationen, deren Senderichtungen orthogonal zueinander sind, und drei Arten von links rotierenden Polarisationen, deren Senderichtungen orthogonal zueinander sind, umfassen, und
die N Arten von unabhängigen rotierenden Polarisationen mindestens sechs Arten aus drei Arten von rechts rotierenden Polarisationen, deren Senderichtungen orthogonal zueinander sind, und drei Arten von links rotierenden Polarisationen, deren Senderichtungen orthogonal zueinander sind, umfassen.

8. Funkkommunikationssystem nach Anspruch 1,
wobei der Sender so konfiguriert ist, dass er während der Messung des Ausbreitungsweges die M Arten von unabhängigen rotierenden Polarisationen durch zeitliche Trennung jeder rotierenden Polarisation oder durch Senden der bekannten Information orthogonal miteinander kodiert sendet.

9. Funkkommunikationssystem nach Anspruch 1, wobei das Kommunikationssystem so konfiguriert ist, dass es eine ankommende Welle mit einer spezifischen rotierenden Polarisation löscht, indem es den Empfänger veranlasst, eine Richtung eines empfangenen elektrischen Feldes mit einer Richtung für den spezifischen Ausbreitungsweg abzustimmen.

10. Funkkommunikationsverfahren, umfassend:
Senden und Empfangen einer rotierenden Polarisation durch einen Sender (201 - 205) und einen Empfänger (301 - 304), wobei
der Sender (201 - 205) M Arten von unabhängigen rotierenden Polarisationen gleichzeitig sendet,
der Empfänger (301 - 304) N Arten von unabhängigen rotierenden Polarisationen gleichzeitig empfängt, und
M ≤ N , wobei M eine natürliche Zahl ist und N eine natürliche Zahl von 2 oder mehr ist, und M Daten gesendet und empfangen werden, wobei
der Sender (201 - 205) während einer Messung eines Ausbreitungsweges eine bekannte Information sendet, indem er die M Arten von unabhängigen rotierenden Polarisationen sendet, und
der Empfänger (301 - 304) die N Arten von unabhängigen rotierenden Polarisationen für jede der M Arten von unabhängigen rotierenden Polarisationen gleichzeitig empfängt und eine Kommunikationsqualität bewertet, und
der Empfänger (301 - 304) während einer Informationskommunikation, wenn er ein Datum empfängt, das mit einer der M Arten von unabhängigen rotierenden Polarisationen gesendet wird, einen Einfluss einer spezifischen rotierenden Polarisation aus den N Arten von unabhängigen rotierenden Polarisationen auf der Grundlage der Bewertung der Kommunikationsqualität ausschließt, um das Datum wiederherzustellen,
wobei der Empfänger (301 - 304) während der Messung des Ausbreitungsweges ein empfangenes Signal der bekannten Information speichert, die für jede Polarisation empfangen wurde, und
der Empfänger (301 - 304) während der Informationskommunikation gleichzeitig die M Arten von unabhängigen rotierenden Polarisationen empfängt, die vom Sender als die N Arten von unabhängigen rotierenden Polarisationen gesendet werden, und die M Daten auf der Grundlage des empfangenen Signals der bekannten Information wiederherstellt.

11. Funkkommunikationsverfahren nach Anspruch 10, wobei
der Sender (201 - 205) während der Messung des Ausbreitungsweges das bekannte Signal mit einer ersten rotierenden Polarisation zu einem ersten Zeitpunkt sendet, und
der Empfänger (301 - 304) unabhängig die gesendete erste rotierende Polarisation als die N Arten von unabhängigen rotierenden Polarisationen empfängt, das bekannte Signal aus jeder der rotierenden Polarisationen detektiert, und eine zweite rotierende Polarisation aus den N Arten von unabhängigen rotierenden Polarisationen auf der Grundlage eines Detektionsergebnisses auswählt, und
der Sender (201 - 205) während einer Informationskommunikation ein erstes Kommunikationsdatum mit der ersten rotierenden Polarisation sendet, und der Empfänger (301 - 304) die gesendete erste rotierende Polarisation als die zweite rotierende Polarisation empfängt und das erste Kommunikationsdatum auf der Grundlage eines von der zweiten rotierenden Polarisation erhaltenen Signals wiederherstellt, und
der Sender (201 - 205) während der Messung des Ausbreitungsweges ein bekanntes Signal mit einer dritten rotierenden Polarisation zu einem zweiten Zeitpunkt sendet, der sich von dem ersten Zeitpunkt unterscheidet, und
der Empfänger (301 - 304) unabhängig die gesendete dritte rotierende Polarisation als die N Arten von unabhängigen rotierenden Polarisationen empfängt, das bekannte Signal aus jeder der rotierenden Polarisationen detektiert und eine vierte rotierende Polarisation aus den N Arten von unabhängigen rotierenden Polarisationen auf der Grundlage des Detektionsergebnisses auswählt, und
der Sender (201 - 205) während der Informationskommunikation ein zweites Kommunikationsdatum mit der dritten rotierenden Polarisation gleichzeitig mit dem Senden des ersten Kommunikationsdatums mit der ersten rotierenden Polarisation sendet, und
der Empfänger (301 - 304) unabhängig die gesendete erste rotierende Polarisation und die dritte rotierende Polarisation als die N Arten von unabhängigen rotierenden Polarisationen empfängt,
das erste Kommunikationsdatum und das zweite Kommunikationsdatum unter Verwendung des Detektionsergebnisses des bekannten Signals auf der Grundlage eines aus der zweiten rotierenden Polarisation erhaltenen Signals trennt und wiederherstellt, und
das erste Kommunikationsdatum und das zweite Kommunikationsdatum unter Verwendung des Detektionsergebnisses des bekannten Signals auf der Grundlage eines von der vierten rotierenden Polarisation erhaltenen Signals trennt und wiederherstellt.

12. Funkkommunikationsverfahren nach Anspruch 11, wobei
das Detektionsergebnis des bekannten Signals Informationen über Amplitude und Phase enthält.

13. Funkkommunikationsverfahren nach Anspruch 11, wobei
die erste rotierende Polarisation und die dritte rotierende Polarisation sich in mindestens einer von einer Rotationsrichtung und einer Senderichtung der Polarisation unterscheiden, und
die zweite rotierende Polarisation und die vierte rotierende Polarisation sich in mindestens einer von der Rotationsrichtung und einer Empfangsrichtung der Polarisation unterscheiden.

## Revendications

1. Système de radiocommunication, comprenant :
un émetteur (201 - 205) ; et un récepteur (301 - 304), dans lequel
l'émetteur (201 - 205) est configuré pour émettre M types de polarisations rotatives indépendantes en même temps,
le récepteur (301 - 304) est configuré pour recevoir N types de polarisations rotatives indépendantes en même temps, et
M ≤ N, où M est un nombre naturel et N est un nombre naturel de 2 ou plus, et M données sont émises et reçues, dans lequel
l'émetteur (201 - 205) est configuré pour émettre, pendant la mesure d'un trajet de propagation, des informations connues en émettant les M types de polarisations rotatives indépendantes, et
le récepteur (301 - 304) est configuré pour recevoir, pendant la mesure du trajet de propagation, les N types de polarisations rotatives indépendantes pour chacun des M types de polarisations rotatives indépendantes en même temps et pour évaluer la qualité de communication, et
le récepteur (301 - 304) est configuré pour exclure, pendant la communication d'informations, lors de la réception de données émises avec l'un des M types de polarisations rotatives indépendantes, une influence d'une polarisation rotative spécifique parmi les N types de polarisations rotatives indépendantes sur la base de l'évaluation de la qualité de communication pour restaurer les données, dans lequel
le récepteur (301 - 304) est configuré pour stocker, pendant la mesure du trajet de propagation, un signal reçu des informations connues reçues pour chaque polarisation, et
le récepteur (301 - 304) est configuré pour recevoir simultanément, pendant la communication d'informations, les M types de polarisations rotatives indépendantes émises par l'émetteur comme les N types de polarisations rotatives indépendantes, et pour restaurer les M données sur la base du signal reçu des informations connues.

2. Système de radiocommunication selon la revendication 1, dans lequel
les M types de polarisations rotatives indépendantes sont au moins un type de polarisation rotative à droite ou de polarisation rotative à gauche, et
les N types de polarisations rotatives indépendantes sont au moins deux types de polarisation rotative à droite et de polarisation rotative à gauche.

3. Système de radiocommunication selon la revendication 1, dans lequel
les M types de polarisations rotatives indépendantes sont au moins deux types de polarisations rotatives dont les directions d'émission sont orthogonales entre elles.

4. Système de radiocommunication selon la revendication 3, dans lequel
les M types de polarisations rotatives indépendantes incluent deux types de polarisations rotatives ayant des directions de rotation différentes.

5. Système de radiocommunication selon la revendication 1, dans lequel
les N types de polarisations rotatives indépendantes sont au moins deux types de polarisations rotatives dont les directions d'émission sont orthogonales entre elles.

6. Système de radiocommunication selon la revendication 5, dans lequel
les N types de polarisations rotatives indépendantes incluent deux types de polarisations rotatives ayant des directions de rotation différentes.

7. Système de radiocommunication selon la revendication 1, dans lequel
les M types de polarisations rotatives indépendantes incluent au moins six types de trois types de polarisations rotatives à droite dont les directions d'émission sont orthogonales entre elles et trois types de polarisations rotatives à gauche dont les directions d'émission sont orthogonales entre elles, et
les N types de polarisations rotatives indépendantes incluent au moins six types de trois types de polarisations rotatives à droite dont les directions d'émission sont orthogonales entre elles et trois types de polarisations rotatives à gauche dont les directions d'émission sont orthogonales entre elles.

8. Système de radiocommunication selon la revendication 1, dans lequel
l'émetteur est configuré pour émettre, pendant la mesure du trajet de propagation, les M types de polarisations rotatives indépendantes en séparant chaque polarisation rotative dans le temps ou en émettant les informations connues codées orthogonalement entre elles.

9. Système de radiocommunication selon la revendication 1, dans lequel
le système de communication est configuré pour supprimer une onde entrante ayant une polarisation rotative spécifique en amenant le récepteur à faire correspondre une direction d'un champ électrique reçu avec une direction du trajet de propagation spécifique.

10. Procédé de radiocommunication, comprenant les étapes consistant à :
émettre et recevoir une polarisation rotative par un émetteur (201 - 205) et un récepteur (301 - 304), dans lequel
l'émetteur (201 - 205) émet M types de polarisations rotatives indépendantes en même temps,
le récepteur (301 - 304) reçoit N types de polarisations rotatives indépendantes en même temps, et
M ≤ N, où M est un nombre naturel et N est un nombre naturel de 2 ou plus, et M données sont émises et reçues, dans lequel,
pendant la mesure d'un trajet de propagation, l'émetteur (201 - 205) émet des informations connues en émettant les M types de polarisations rotatives indépendantes, et
le récepteur (301 - 304) reçoit les N types de polarisations rotatives indépendantes pour chacun des M types de polarisations rotatives indépendantes en même temps et évalue la qualité de communication, et
pendant la communication d'informations, lors de la réception de données émises avec l'un des M types de polarisations rotatives indépendantes, le récepteur (301 - 304) exclut une influence d'une polarisation rotative spécifique parmi les N types de polarisations rotatives indépendantes sur la base de l'évaluation de la qualité de communication pour restaurer les données, dans lequel,
pendant la mesure du trajet de propagation, le récepteur (301 - 304) stocke un signal reçu des informations connues reçues pour chaque polarisation, et
pendant la communication d'informations, le récepteur (301 - 304) reçoit simultanément les M types de polarisations rotatives indépendantes émises par l'émetteur comme les N types de polarisations rotatives indépendantes et restaure les M données sur la base du signal reçu des informations connues.

11. Procédé de radiocommunication selon la revendication 10, dans lequel
pendant la mesure du trajet de propagation, l'émetteur (201 - 205) émet le signal connu avec une première polarisation rotative à un premier moment et le récepteur (301 - 304) reçoit indépendamment la première polarisation rotative émise comme les N types de polarisations rotatives indépendantes, détecte le signal connu de chacune des polarisations rotatives et sélectionne une deuxième polarisation rotative parmi les N types de polarisations rotatives indépendantes sur la base d'un résultat de détection, et pendant la communication d'informations, l'émetteur (201 - 205) émet des premières données de communication avec la première polarisation rotative et le récepteur (301 - 304) reçoit la première polarisation rotative émise comme la deuxième polarisation rotative et restaure les premières données de communication sur la base d'un signal obtenu à partir de la deuxième polarisation rotative, et
pendant la mesure du trajet de propagation, l'émetteur (201 - 205) émet un signal connu avec une troisième polarisation rotative à un deuxième moment différent du premier moment, et
le récepteur (301 - 304) reçoit indépendamment la troisième polarisation rotative émise comme les N types de polarisations rotatives indépendantes, détecte le signal connu de chacune des polarisations rotatives et sélectionne une quatrième polarisation rotative parmi les N types de polarisations rotatives indépendantes sur la base du résultat de la détection, et
pendant la communication d'informations, l'émetteur (201 - 205) émet des deuxièmes données de communication avec la troisième polarisation rotative simultanément à l'émission des premières données de communication avec la première polarisation rotative, et
le récepteur (301 - 304) reçoit indépendamment la première polarisation rotative et la troisième polarisation rotative émises comme les N types de polarisations rotatives indépendantes,
sépare et restaure les premières données de communication et les deuxièmes données de communication en utilisant le résultat de détection du signal connu sur la base d'un signal obtenu à partir de la deuxième polarisation rotative, et
sépare et restaure les premières données de communication et les deuxièmes données de communication en utilisant le résultat de détection du signal connu sur la base d'un signal obtenu à partir de la quatrième polarisation rotative.

12. Procédé de radiocommunication selon la revendication 11, dans lequel
le résultat de détection du signal connu inclut des informations sur l'amplitude et la phase.

13. Procédé de radiocommunication selon la revendication 11, dans lequel
la première polarisation rotative et la troisième polarisation rotative diffèrent par au moins une direction parmi une direction de rotation et une direction d'émission de la polarisation, et
la deuxième polarisation rotative et la quatrième polarisation rotative diffèrent par au moins une direction parmi la direction de rotation et une direction de réception de la polarisation.
